# EUROPEAN PATENT SPECIFICATION

(11) **EP 3 855 209 B1**
(45) Date of publication and mention of the grant of the patent: **19.02.2025**
(21) Application number: 19814737.3
(22) Date of filing: 31.07.2019
(51) Int. Cl.: G01S 7/481, G02B 6/42

(54) **LIDAR, LASER, LASER EMISSION PANEL ASSEMBLY, AND PACKAGING METHOD FOR LASER**
LIDAR, LASER, LASERABSTRAHLPLATTENANORDNUNG UND VERPACKUNGSVERFAHREN FÜR LASER
LIDAR, LASER, ENSEMBLE PANNEAU D'ÉMISSION LASER ET PROCÉDÉ DE CONDITIONNEMENT POUR LASER

(43) Date of publication of application: 28.07.2021
(73) Proprietor: Hesai Technology Co., Ltd., Shanghai (CN)
(72) Inventor: LI, Jiasheng, Shanghai 201702 (CN); LI, Na, Shanghai 201702 (CN); XIANG, Shaoqing, Shanghai 201702 (CN)
(74) Representative: Appelt, Christian W.
(86) International application number: PCT/CN2019/098623
(87) International publication number: WO 2019/233499

(56) References cited:
- EP-A1- 2 388 615
- CN-A- 101 834 402
- CN-A- 102 385 125
- CN-A- 102 385 125
- CN-A- 106 405 525
- CN-A- 106 405 525
- CN-A- 106 980 160
- CN-A- 107 121 683
- CN-A- 107 271 983
- CN-A- 107 271 983
- CN-A- 108 828 558
- CN-C- 100 456 581
- US-A1- 2016 282 453

## Description

### BACKGROUND

### Technical Field

The present invention relates to the technical field of laser detection, and in particular, to a lidar, a laser emitter, a laser emitter emitting board assembly, and a method for manufacturing the laser emitter.

### Related Art

As an important part of an intelligent vehicle-environment sensing hardware system, a lidar undertakes important tasks such as roadside detection, obstacle recognition, and real-time localization and mapping (SLAM) in automatic driving. A lidar system includes a laser emitting system and a receiving system. The laser emitting system generates and emits light pulses, which impinge on an object and are reflected back and are finally received by a receiver. The receiver accurately measures propagation duration between emission and reflection of light pulses. Since the light pulse propagates at the speed of light, the receiver always receives a previous reflected pulse before a next pulse is emitted. Since the speed of light is known, the propagation time can be converted into a measured distance. The lidar can accurately measure a position (a distance and an angle), a motion state (a speed, vibration, and a posture) and a shape of a target, to detect, identify, distinguish and track the target. Due to a fast measurement speed, high accuracy and a capability of long-distance measurement, the lidar is widely used in intelligent vehicles.

An existing mechanical multi-beam lidar generates a plurality of laser beams by a plurality of laser sources which multiplex the same lens or the same set of lenses, where the plurality of laser light sources are arranged at different heights on a focal plane of the lens. In this way, different orientations in the vertical direction are generated, thus forming a plurality of laser beams. In order to increase a number of laser beams of the lidar, laser emitters are arranged at different heights on an image surface of the emitting lens. A smaller height difference leads to more laser beams and a higher beam angle resolution. A larger number of columns leads to greater difficulty in production, assembly, and adjustment, a more complex process, and lower production efficiency. Space utilization in the system is low, the focal plane is very crowed, and a large amount of heat is generated, which is very difficult to conduct. However, at other places, there are few devices and little heat is generated Laser emitter arrangement relates to a whole layout of a laser emitting apparatus. A conventional semiconductor laser pulse diode has a very small light-emitting area. However, in fact, laser emitters cannot be very close to each other due to chip encapsulation and a size of a drive circuit. In addition, most lidars transmit power through a wireless power transmission apparatus, and specific arrangement of the wireless power transmission apparatus may affect overall performance of the lidar. Therefore, it is necessary to provide a new lidar that is less difficult to assemble and adjust and for which heat dissipation of a laser emitter and reduction of an overall size are also considered.

US 2016/282453 A1 describes a method that involves mounting a transmit block and a receive block in a LIDAR device to provide a relative position between the transmit block and the receive block. The method also involves locating a camera at a given position at which the camera can image light beams emitted by the transmit block and can image the receive block. The method also involves obtaining, using the camera, a first image indicative of light source positions of one or more light sources in the transmit block and a second image indicative of detector positions of one or more detectors in the receive block. The method also involves determining at least one offset based on the first image and the second image. The method also involves adjusting the relative position between the transmit block and the receive block based at least in part on the at least one offset.

CN 107 271 983 A describes a multi-line laser radar. The multi-line laser radar comprises a laser, a photoelectric sensor and a scanning device. The scanning device comprises a center shaft, a motor, a rotating cavity and a base, wherein a stator of the motor is arranged at the outer edge of an upper portion of the center shaft in a sleeved manner, and a rotor of the motor rotates around the center shaft; the rotating cavity is arranged at the outer edge of the center shaft located at the lower part of the stator, the rotor is connected with the rotating cavity and drives the rotating cavity to rotate around the center shaft, and the distance between the bottom end of the rotating cavity and the base is greater than zero; the laser and the photoelectric sensor are arranged in the rotating cavity; and the bottom end of the center shaft is fixed on the base.

CN 106 405 525 A describes a flight time principle-based laser radar optical path system. The optical path system includes a shell and a laser emitting and receiving device which is located in the shell and carries rotary scanning on environment in a target range; the laser emitting and receiving device comprises a laser emitting module and a reflection light receiving module arranged at one side of the laser emitting module; and an optical path between the laser emitting module and the reflection light receiving module is provided with a light blocking component which blocks light echo interference on the reflection light receiving module caused by emitted laser on the shell.

CN 100 456 581 C describes a semiconductor laser shaping device which is provided with a semiconductor laser on a support, a one-dimensional gradient refractive index lens is provided in the direction of the laser beam emitted from the semiconductor laser on the support, the one-dimensional gradient refractive index lens is a flat lens, the laser is incident along the thickness direction of the one-dimensional gradient refractive index lens, the laser incident surface of the one-dimensional gradient refractive index lens is a plane or cylindrical side perpendicular to the laser fast axis direction, the laser exit surface is a plane or cylindrical side perpendicular to the laser fast axis direction, the distance between the one-dimensional gradient refractive index lens and the semiconductor laser is 0.05-2.5mm.

CN 101 834 402 B describes a semiconductor laser side pump module comprising one or more side pump module units and a crystal bar, wherein each side pump module unit comprises a baseplate, a semiconductor laser module fixed on the baseplate, a fast axis collimator arranged at the front end of the semiconductor laser module and a beam expander arranged behind the fast axis collimator, and the crystal bar is arranged behind the beam expander; the semiconductor laser module comprises a bar; and the side pump module unit also comprises a homogenizing mirror arranged between the beam expander and the crystal bar.

CN 102 385 125 A describes a multi-channel small form-factor transceiver which comprises a circuit board, a heat sink substrate, semiconductor laser array chips or semiconductor diode receiving chips and coupling optical fiber, wherein the heat sink substrate is arranged on the circuit board, and the semiconductor laser array chips or semiconductor diode receiving chips are arranged on the heat sink substrate, are perpendicular to the optical fiber.

### SUMMARY

To resolve at least one of the above technical problems, the present invention relates to a lidar according to claim 1, and a lidar according to claim 7. Claims 2 to 6 refer to specifically advantageous realizations of the lidar according to claim 1, and claims 8 and 9 refer to specifically advantageous realizations of the lidar according to claim 7.

According to a first aspect of the present invention, a lidar is provided. The lidar includes a rotor, a laser emitting system, and a receiving system. The rotor has an emitting chamber and a receiving chamber that are separated from each other. The laser emitting system is disposed in the emitting chamber, and the receiving system is disposed in the receiving chamber. The laser emitting system includes a laser emitter bracket configured to fix at least one laser emitter emitting board.

Further, the laser emitter emitting board is fixed in a direction perpendicular to a first plane by the laser emitter bracket. Alternatively, the laser emitter emitting board is fixed in a direction parallel to the first plane by the laser emitter bracket. The first plane is a plane defined by a rotation direction of the rotor of the lidar. In an optional example, the lidar is placed horizontally, and the first plane is a plane parallel to the horizontal plane. Certainly, the horizontal plane is not a limitation on a position of the first plane in this specification.

According to a second aspect of the present invention, a lidar is provided. The lidar a rotor, a laser emitting system, and a receiving system. The rotor has an emitting chamber and a receiving chamber that are separated from each other. The laser emitting system is disposed in the emitting chamber, and the receiving system is disposed in the receiving chamber. The rotor further includes an outer cylinder and an inner cylinder. A mounting structure for an emitting lens set and a receiving lens set is disposed on a wall of the outer cylinder.

According to a third aspect of the present invention, a lidar is provided. The lidar includes a rotor, a laser emitting system, and a receiving system. The rotor has an emitting chamber and a receiving chamber that are separated from each other. The laser emitting system is disposed in the emitting chamber, and the receiving system is disposed in the receiving chamber. The laser emitting system includes a first mirror set and an emitting lens set, where the first mirror set is configured to change a path of an exit beam of the laser emitter, so that the laser beam is incident on the emitting lens set, and the emitting lens set is configured to emit detection light; and/or the receiving system includes a receiving lens set, a second mirror set, and a receiving apparatus, where the receiving lens set is configured to converge light reflected from a to-be-detected object, and the second mirror set is configured to change a path of a beam, so that the reflected light is incident on the receiving apparatus.

According to a fourth aspect of the present invention, a lidar is provided. The lidar includes: a rotor, a laser emitting system, and a receiving system, where the rotor has an emitting chamber and a receiving chamber that are separated from each other, the laser emitting system is disposed in the emitting chamber, and the receiving system is disposed in the receiving chamber; a wireless power transmission apparatus including a wireless power emitting assembly and a wireless power receiving assembly, where the wireless power emitting assembly is separated from the wireless power receiving assembly, the wireless power emitting assembly includes a transmitting coil and a transmitting circuit board, where the transmitting coil is connected to the transmitting circuit board; and the wireless power receiving assembly includes a receiving coil and a magnetic isolation element, where a first surface of the receiving coil is separated from a second surface of the transmitting coil, and the magnetic isolation element is disposed on a side of the receiving coil away from the transmitting coil. In a specific example, the first surface of the receiving coil and the second surface of the transmitting coil are planes of the receiving coil and the transmitting coil close to each other.

According to an aspect of the present invention, the laser emitting system includes a laser emitter disposed on the laser emitter emitting board, where the laser emitter includes: a base having a positioning portion thereon; a laser emitter chip disposed on the base and having a light-emitting surface; a laser beam shaping element positioned opposite to the light-emitting surface of the laser emitter chip through the positioning portion.

According to an aspect of the present invention, the positioning portion includes one or more of a V-shaped groove, a U-shaped groove, and a step, and the laser beam shaping element includes one or more of an optical fiber, a cylindrical lens, a D lens, or an aspherical lens.

According to an aspect of the present invention, the laser emitter chip is of an edge-emitting type, the light-emitting surface has a slow axis direction and a fast axis direction, where the slow axis direction is parallel to a direction in which the laser beam shaping element extends, and the laser beam shaping element is a fast axis compression element configured to compress an angle of divergence of a laser emitted from the light-emitting surface in the fast axis direction.

According to an aspect of the present invention, the base is a silicon base, the positioning portion is formed on the silicon base through an etching process, and the laser emitter further includes an electrode disposed on the base, where the electrode is configured to supply power to the laser emitter chip and includes a positive electrode and a negative electrode separated by a partition.

According to an aspect of the present invention, the positive electrode and the negative electrode are both disposed on the same surface of the base as the laser emitter chip and on a side surface of the base perpendicular to the light-emitting surface.

According to an aspect of the present invention, the positive electrode and the negative electrode are both disposed on the same surface of the base as the laser emitter chip and on an end surface of the base parallel to the light-emitting surface.

According to an aspect of the present invention, the laser emitter emitting board includes a circuit board and a plurality of laser emitters disposed on the circuit board, where light-emitting surfaces of laser emitter chips of the laser emitters are oriented in the same direction.

According to an aspect of the present invention, the plurality of laser emitters are soldered on the circuit board, where a slow axis direction of the light-emitting surfaces of the plurality of laser emitters is perpendicular to the circuit board.

According to an aspect of the present invention, the plurality of laser emitters are soldered on the circuit board, where a slow axis direction of the light-emitting surfaces of the plurality of laser emitters is parallel to the circuit board, and the light-emitting surfaces of the laser emitter chips in the plurality of laser emitters on the circuit board are staggered with respect to each other in a fast axis direction.

According to an aspect of the present invention, the laser emitter bracket is a comb structure with a plurality of vertical slots, where laser emitter emitting boards are respectively disposed in the plurality of slots, where light-emitting surfaces of laser emitter chips of the laser emitter emitting boards in the plurality of slots are staggered with respect to each other in a fast axis direction.

According to an aspect of the present invention, a center of the laser beam shaping element is at the same height as a center of the light-emitting surface of the laser emitter chip.

The present invention further relates to a lidar. The lidar includes: a rotor, where the rotor has an emitting chamber and a receiving chamber that are separated from each other, where the emitting chamber and the receiving chamber are asymmetrically distributed; a laser emitting system disposed in the emitting chamber; and a receiving system disposed in the receiving chamber, where the rotor further includes an outer cylinder and an inner cylinder, and a mounting structure for an emitting lens set and a receiving lens set is disposed on a wall of the outer cylinder.

According to an aspect of the present invention, an accommodation cavity is formed between the outer cylinder and the inner cylinder, where a separator is disposed in the accommodation cavity, where one end of the separator is connected to the outer cylinder, the other end of the separator is connected to the inner cylinder, and the separator divides the accommodation cavity into the emitting chamber and the receiving chamber.

According to an aspect of the present invention, a third counterweight structure is provided on the rotor, where the third counterweight structure is disposed on both sides of the mounting structure, and the third counterweight structure includes a plurality of first grooves, where a connecting rib is formed between two adjacent first grooves.

According to an aspect of the present invention, the wall of the outer cylinder includes a movable wall and a fixed wall, where the movable wall is detachably connected to the fixed wall, and at least one first counterweight block is disposed on the movable wall.

According to an aspect of the present invention, the lidar further includes a baseplate, where the baseplate is disposed at a bottom of the rotor, and at least one second counterweight block is disposed on the baseplate.

According to an aspect of the present invention, where the laser emitting system includes a laser emitter. The laser emitter includes: a base having a positioning portion thereon; a laser emitter chip disposed on the base and having a light-emitting surface; a laser beam shaping element positioned opposite to the light-emitting surface of the laser emitter chip through the positioning portion.

According to an aspect of the present invention, the positioning portion includes one or more of a V-shaped groove, a U-shaped groove, and a step, and the laser beam shaping element includes one or more of an optical fiber, a cylindrical lens, a D lens, or an aspherical lens.

According to an aspect of the present invention, the laser emitter chip is of an edge-emitting type, the light-emitting surface has a slow axis direction and a fast axis direction, where the slow axis direction is parallel to a direction in which the laser beam shaping element extends, and the laser beam shaping element is a fast axis compression element configured to compress an angle of divergence of a laser emitted from the light-emitting surface in the fast axis direction.

According to an aspect of the present invention, the base is a silicon base, the positioning portion is formed on the silicon base through an etching process, and the laser emitter further includes an electrode disposed on the base, where the electrode is configured to supply power to the laser emitter chip and includes a positive electrode and a negative electrode separated by a partition.

According to an aspect of the present invention, the positive electrode and the negative electrode are both disposed on the same surface of the base as the laser emitter chip and on a side surface of the base perpendicular to the light-emitting surface.

According to an aspect of the present invention, the positive electrode and the negative electrode are both disposed on the same surface of the base as the laser emitter chip and on an end surface of the base parallel to the light-emitting surface.

According to an aspect of the present invention, the laser emitting system includes a laser emitter bracket and at least one laser emitter emitting board fixed to the laser emitter bracket, where the laser emitter emitting board includes a circuit board and a plurality of laser emitters disposed on the circuit board, where light-emitting surfaces of laser emitter chips of the laser emitters are oriented in the same direction.

According to an aspect of the present invention, the plurality of laser emitters are soldered on the circuit board, where a slow axis direction of the light-emitting surfaces of the plurality of laser emitters is perpendicular to the circuit board.

According to an aspect of the present invention, the plurality of laser emitters are soldered on the circuit board, where a slow axis direction of the light-emitting surfaces of the plurality of laser emitters is parallel to the circuit board, and the light-emitting surfaces of the laser emitter chips in the plurality of laser emitters on the circuit board are staggered with respect to each other in a fast axis direction.

According to an aspect of the present invention, the laser emitter bracket is a comb structure with a plurality of vertical slots, where laser emitter emitting boards are respectively disposed in the plurality of slots, where light-emitting surfaces of laser emitter chips of the laser emitter emitting boards in the plurality of slots are staggered with respect to each other in a fast axis direction.

According to an aspect of the present invention, a center of the laser beam shaping element is at the same height as a center of the light-emitting surface of the laser emitter chip.

The present invention relates to a lidar. The lidar includes: a rotor, where the rotor has an emitting chamber and a receiving chamber that are separated from each other, where the emitting chamber and the receiving chamber are asymmetrically distributed; a laser emitting system disposed in the emitting chamber; and a receiving system disposed in the receiving chamber, where the laser emitting system includes a laser emitter, a first mirror set, and an emitting lens set, where the first mirror set is configured to change a path of a laser beam of the laser emitter, so that the laser beam is incident on the emitting lens set, and the emitting lens set is configured to emit detection light; and/or the receiving system includes a receiving lens set, a second mirror set, and a receiving apparatus, where the receiving lens set is configured to converge light reflected from a to-be-detected object, and the second mirror set is configured to change a path of the beam, so that the reflected light is incident on the receiving apparatus.

According to an aspect of the present invention, the lidar further includes a light isolation sheet and a light isolation frame, where the light isolation sheet is disposed between the emitting lens set and the receiving lens set, one end of the light isolation sheet is disposed between a second mirror and a fourth mirror, and the other end of the light isolation sheet is attached to the light isolation frame.

According to an aspect of the present invention, the lidar further includes a fixed block, where a lapping strip is disposed on the fixed block, where one end of the lapping strip is lapped on an inner cylinder, and the other end of the lapping strip is lapped on an outer cylinder.

According to an aspect of the present invention, the receiving apparatus includes a light filter, a receiving device, a receiving circuit bracket, and a plurality of receiving circuit boards, where the receiving device and the receiving circuit boards are mounted to the receiving circuit bracket, and the light filter is configured to filter stray light.

According to an aspect of the present invention, the receiving device includes a substrate and at least one APD detector, where the substrate is fixed to the receiving circuit bracket, and the APD detector is disposed on a side surface of the substrate.

According to an aspect of the present invention, the lidar further includes a pedestal, an enclosure, and a top cap, one end of the enclosure is mated with the pedestal, the other end of the enclosure is mated with the top cap, and the pedestal, the enclosure, and the top cap are sequentially connected to form an enclosed cavity, where enclosed cavity is configured to accommodate the rotor, the laser emitting system, and the receiving system.

According to an aspect of the present invention, the receiving device includes a plurality of APD detectors, where the APD detectors are arranged as linear-array APD detectors or planar-array APD detectors.

According to an aspect of the present invention, the laser emitter includes: a base having a positioning portion thereon; a laser emitter chip disposed on the base and having a light-emitting surface; a laser beam shaping element positioned opposite to the light-emitting surface of the laser emitter chip through the positioning portion.

According to an aspect of the present invention, the positioning portion includes one or more of a V-shaped groove, a U-shaped groove, and a step, and the laser beam shaping element includes one or more of an optical fiber, a cylindrical lens, a D lens, or an aspherical lens.

According to an aspect of the present invention, the laser emitter chip is of an edge-emitting type, the light-emitting surface has a slow axis direction and a fast axis direction, where the slow axis direction is parallel to a direction in which the laser beam shaping element extends, and the laser beam shaping element is a fast axis compression element configured to compress an angle of divergence of a laser emitted from the light-emitting surface in the fast axis direction.

According to an aspect of the present invention, the base is a silicon base, the positioning portion is formed on the silicon base through an etching process, and the laser emitter further includes an electrode disposed on the base, where the electrode is configured to supply power to the laser emitter chip and includes a positive electrode and a negative electrode separated by a partition.

According to an aspect of the present invention, the positive electrode and the negative electrode are both disposed on the same surface of the base as the laser emitter chip and on a side surface of the base perpendicular to the light-emitting surface.

According to an aspect of the present invention, the positive electrode and the negative electrode are both disposed on the same surface of the base as the laser emitter chip and on an end surface of the base parallel to the light-emitting surface.

According to an aspect of the present invention, the laser emitting system includes a laser emitter bracket and at least one laser emitter emitting board fixed to the laser emitter bracket, where the laser emitter emitting board includes a circuit board and a plurality of laser emitters disposed on the circuit board, where light-emitting surfaces of laser emitter chips of the laser emitters are oriented in the same direction.

According to an aspect of the present invention, the plurality of laser emitters are soldered on the circuit board, where a slow axis direction of the light-emitting surfaces of the plurality of laser emitters is perpendicular to the circuit board.

According to an aspect of the present invention, the plurality of laser emitters are soldered on the circuit board, where a slow axis direction of the light-emitting surfaces of the plurality of laser emitters is parallel to the circuit board, and the light-emitting surfaces of the laser emitter chips in the plurality of laser emitters on the circuit board are staggered with respect to each other in a fast axis direction.

According to an aspect of the present invention, the laser emitter bracket is a comb structure with a plurality of vertical slots, where laser emitter emitting boards are respectively disposed in the plurality of slots, where light-emitting surfaces of laser emitter chips of the laser emitter emitting boards in the plurality of slots are staggered with respect to each other in a fast axis direction.

According to an aspect of the present invention, a center of the laser beam shaping element is at the same height as a center of the light-emitting surface of the laser emitter chip.

The present invention further relates to a lidar. The lidar includes: a rotor, where the rotor has an emitting chamber and a receiving chamber that are separated from each other, where the emitting chamber and the receiving chamber are asymmetrically distributed; a laser emitting system disposed in the emitting chamber; and a receiving system disposed in the receiving chamber; and a wireless power transmission apparatus disposed on a top side inside the lidar and including a wireless power emitting assembly and a wireless power receiving assembly, where the wireless power emitting assembly is separated from the wireless power receiving assembly, the wireless power emitting assembly includes a transmitting coil and a transmitting circuit board, where the transmitting coil is connected to the transmitting circuit board; and the wireless power receiving assembly includes a receiving coil and at least one receiving circuit board, where the receiving coil is separated from the transmitting coil, and the receiving coil is connected to the receiving circuit board.

According to an aspect of the present invention, the wireless power receiving assembly further includes a magnetic isolation element, where the magnetic isolation element is a magnetic isolation board, where the magnetic isolation board is disposed on a side of the receiving coil away from the transmitting coil.

According to an aspect of the present invention, the receiving circuit board includes a fourth circuit board and a fifth circuit board, where a first surface of the fourth circuit board is separated from a second surface of the fifth circuit board, the fifth circuit board is connected to the magnetic isolation board, and the magnetic isolation board is disposed on a side of the fifth circuit board facing the fourth circuit board.

According to an aspect of the present invention, where the laser emitting system includes a laser emitter. The laser emitter includes: a base having a positioning portion thereon; a laser emitter chip disposed on the base and having a light-emitting surface; a laser beam shaping element positioned opposite to the light-emitting surface of the laser emitter chip through the positioning portion.

According to an aspect of the present invention, the positioning portion includes one or more of a V-shaped groove, a U-shaped groove, and a step, and the laser beam shaping element includes one or more of an optical fiber, a cylindrical lens, a D lens, or an aspherical lens.

According to an aspect of the present invention, the laser emitter chip is of an edge-emitting type, the light-emitting surface has a slow axis direction and a fast axis direction, where the slow axis direction is parallel to a direction in which the laser beam shaping element extends, and the laser beam shaping element is a fast axis compression element configured to compress an angle of divergence of a laser emitted from the light-emitting surface in the fast axis direction.

According to an aspect of the present invention, the base is a silicon base, the positioning portion is formed on the silicon base through an etching process, and the laser emitter further includes an electrode disposed on the base, where the electrode is configured to supply power to the laser emitter chip and includes a positive electrode and a negative electrode separated by a partition.

According to an aspect of the present invention, the positive electrode and the negative electrode are both disposed on the same surface of the base as the laser emitter chip and on a side surface of the base perpendicular to the light-emitting surface.

According to an aspect of the present invention, the positive electrode and the negative electrode are both disposed on the same surface of the base as the laser emitter chip and on an end surface of the base parallel to the light-emitting surface.

According to an aspect of the present invention, the laser emitting system includes a laser emitter bracket and at least one laser emitter emitting board fixed to the laser emitter bracket, where the laser emitter emitting board includes a circuit board and a plurality of laser emitters disposed on the circuit board, where light-emitting surfaces of laser emitter chips of the laser emitters are oriented in the same direction.

According to an aspect of the present invention, the plurality of laser emitters are soldered on the circuit board, where a slow axis direction of the light-emitting surfaces of the plurality of laser emitters is perpendicular to the circuit board.

According to an aspect of the present invention, the plurality of laser emitters are soldered on the circuit board, where a slow axis direction of the light-emitting surfaces of the plurality of laser emitters is parallel to the circuit board, and the light-emitting surfaces of the laser emitter chips in the plurality of laser emitters on the circuit board are staggered with respect to each other in a fast axis direction.

According to an aspect of the present invention, the laser emitter bracket is a comb structure with a plurality of vertical slots, where laser emitter emitting boards are respectively disposed in the plurality of slots, where light-emitting surfaces of laser emitter chips of the laser emitter emitting boards in the plurality of slots are staggered with respect to each other in a fast axis direction.

According to an aspect of the present invention, a center of the laser beam shaping element is at the same height as a center of the light-emitting surface of the laser emitter chip.

The present invention further relates to a laser emitter. The laser emitter includes: a base having a positioning portion thereon; a laser emitter chip disposed on the base and having a light-emitting surface; a laser beam shaping element positioned opposite to the light-emitting surface of the laser emitter chip through the positioning portion.

According to an aspect of the present invention, the positioning portion includes one or more of a V-shaped groove, a U-shaped groove, and a step.

According to an aspect of the present invention, the laser beam shaping element includes one or more of an optical fiber, a cylindrical lens, a D lens, or an aspherical lens.

According to an aspect of the present invention, the laser emitter chip is of an edge-emitting type, the light-emitting surface has a slow axis direction and a fast axis direction, where the slow axis direction is parallel to a direction in which the laser beam shaping element extends, and the laser beam shaping element is a fast axis compression element configured to compress an angle of divergence of a laser emitted from the light-emitting surface in the fast axis direction.

According to an aspect of the present invention, the base is a silicon base, and the positioning portion is formed on the silicon base through an etching process.

According to an aspect of the present invention, the laser emitter further includes an electrode disposed on the base, where the electrode is configured to supply power to the laser emitter chip.

According to an aspect of the present invention, the electrode includes a positive electrode and a negative electrode separated by a partition.

According to an aspect of the present invention, the positive electrode and the negative electrode are both disposed on the same surface of the base as the laser emitter chip and on a side surface of the base perpendicular to the light-emitting surface.

According to an aspect of the present invention, the positive electrode and the negative electrode are both disposed on the same surface of the base as the laser emitter chip and on an end surface of the base parallel to the light-emitting surface.

According to an aspect of the present invention, a center of the laser beam shaping element is at the same height as a center of the light-emitting surface of the laser emitter chip.

The present invention further relates to a laser emitter emitting board assembly. The laser emitter emitting board assembly includes: a circuit board; and the plurality of laser emitters described above disposed on the circuit board, where the light-emitting surfaces of the laser emitter chips of the laser emitters are oriented in the same direction.

According to an aspect of the present invention, the plurality of laser emitters are soldered on the circuit board, where a slow axis direction of the light-emitting surfaces of the plurality of laser emitters is perpendicular to the circuit board.

According to an aspect of the present invention, the plurality of laser emitters are soldered on the circuit board, where a slow axis direction of the light-emitting surfaces of the plurality of laser emitters is parallel to the circuit board, and the light-emitting surfaces of the laser emitter chips in the plurality of laser emitters on the circuit board are staggered with respect to each other in a fast axis direction.

According to an aspect of the present invention, the laser emitting system includes a plurality of circuit boards, the plurality of laser emitters are disposed on each of the circuit boards, and the light-emitting surfaces of the laser emitter chips in the laser emitters on the plurality of circuit boards are staggered with respect to each other in the fast axis direction.

According to an aspect of the present invention, a center of the laser beam shaping element is at the same height as a center of the light-emitting surface of the laser emitter chip.

The present invention further relates to a lidar. The lidar includes the laser emitting system described above.

The present invention further relates to a method for encapsulating a laser emitter. The method includes:
providing or preparing a base;
forming a positioning portion on the base through etching or chemical corrosion;
mounting a laser emitter chip on the base; and
positioning a laser beam shaping element on the base through the positioning portion, so that a light-emitting surface of the laser emitter chip is opposite to the laser beam shaping element.

According to an aspect of the present invention, the laser emitter chip is of an edge-emitting type, the light-emitting surface has a slow axis direction and a fast axis direction, where the slow axis direction is parallel to a direction in which the laser beam shaping element extends, and the laser beam shaping element is a fast axis compression element configured to compress an angle of divergence of a laser emitted from the light-emitting surface in the fast axis direction.

According to an aspect of the present invention, the base is a silicon base.

According to an aspect of the present invention, the method further includes: causing a center of the laser beam shaping element to be at the same height as a center of the light-emitting surface of the laser emitter chip.

The lidar according to the present invention has the following beneficial effects by adopting the above technical solutions.
(1) The laser emitting apparatus of the lidar according to the present invention adopts the laser emitter bracket and a transmitting circuit bracket for respectively mounting the laser emitter emitting board and a transmitting circuit set, so that the space in the emitting chamber of the lidar can be utilized more flexibly, and the volume of the laser emitter emitting board can be reduced to reduce the size and weight of the system, thus reducing the costs and facilitating the miniaturization of the lidar; **In** addition, the lidar of the present invention can easily achieve a greater number of laser beams by combining the layout of the laser emitter emitting board on the laser emitter bracket with the arrangement of laser emitters..
(2) The laser emitter array of the laser emitting apparatus of the lidar according to the present invention may be non-uniformly distributed. When the laser beam is non-uniformly distributed and is designed with a relatively small number of laser beams, a relatively high vertical angular resolution can be achieved, thus reducing costs and the volume.
(3) The lidar according to the present invention is provided with a third counterweight structure symmetrically disposed on both sides of the emitting lens set and the receiving lens set, which increases a surface area of the wall of the outer cylinder while improving counterweight flexibility of the rotor, thereby effectively improving a heat dissipation effect of the rotor. The third counterweight structure includes a plurality of first grooves. In addition to increasing the surface area and improving the heat dissipation effect, a first groove structure is disposed on the wall of the outer cylinder of the rotor, so that an overall weight of the rotor can be effectively reduced, and the weight of the rotor is minimized, thus effectively reducing energy consumption during the rotation of the rotor. In addition to improving the heat dissipation effect and reducing the energy consumption, counterweight materials may be flexibly added to the first groove structure to effectively adjust overall balance of the rotor, thus improving flexibility of the overall balance adjustment of the rotor. In addition, a connecting rib is formed between the adjacent first grooves, which acts as a reinforcing rib, improving overall strength of the rotor.
(4) In the present invention, the lidar divides the wall of the outer cylinder into a movable wall and a fixed wall through a reinforcing strip and a separator, which facilitates mounting of the emitting assembly while improving an overall injection molding process of the rotor. The movable wall structure includes a guide portion, which can effectively reduce resistance for the rotor during rotation, thereby reducing energy consumption for overcoming the resistance.
(5) The lidar according to the present invention completely isolates the emitting chamber from the receiving chamber through the fixed block, the light isolation sheet, and the light isolation frame that are disposed, which avoids mutual interference between light paths in the emitting chamber and the receiving chamber, thus improving measurement accuracy of the lidar. Moreover, the emitting chamber and the receiving chamber are asymmetrically distributed, so that the emitting chamber and the receiving chamber can be adapted to specific structures and specific volumes of the laser emitting system and the receiving system.
(6) The light filter of the receiving apparatus of the lidar according to the present invention is disposed on a side of the receiving device facing the second mirror set, so that stray light can be filtered. The APD detector of the receiving device is further covered with a metal protective shell, which can protect the receiving device and avoid foreign matter such as dust from entering and damaging the device.

### BRIEF DESCRIPTION OF THE DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts
FIG. 1 is a schematic diagram of a structure of a rotor of a lidar;
FIG. 2 is a light path diagram of a lidar;
FIG. 3 is a top view of FIG. 1;
FIG. 4 is a schematic diagram of another structure of a rotor of a lidar;
FIG. 5 is a schematic diagram of another structure of a rotor of a lidar;
FIG. 6 is a schematic diagram of another structure of a rotor of a lidar;
FIG. 7 is a schematic diagram of another structure of a rotor of a lidar;
FIG. 8 is a schematic diagram of another structure of a rotor of a lidar;
FIG. 9 is a schematic structural diagram of a bottom plate of a rotor of a lidar;
FIG. 10 is a schematic structural diagram of a baseplate of a lidar;
FIG. 11 is a schematic structural diagram of a pedestal of a lidar;
FIG. 12 is a cross-sectional view of a pedestal of a lidar;
FIG. 13 is a schematic diagram of a laser emitting apparatus according to Embodiment 3 of the present invention;
FIG. 14 is a schematic diagram of assembly of a laser emitter bracket and a laser emitter emitting board according to Embodiment 3 of the present invention;
FIG. 15 is a three-dimensional schematic diagram of a laser emitter bracket according to Embodiment 3 of the present invention;
FIG. 16 is a schematic diagram of assembly of a transmitting circuit bracket and a transmitting circuit set according to the present invention;
FIG. 17 is a three-dimensional schematic diagram of a transmitting circuit bracket according to the present invention;
FIG. 18 is a schematic diagram of a laser emitter bracket according to Embodiment 4 of the present invention;
FIG. 19 is a schematic diagram of arrangement of a laser emitter emitting board according to Embodiment 4 of the present invention;
FIG. 20 is a schematic diagram of arrangement of a laser emitter emitting board according to Embodiment 5 of the present invention;
FIG. 21 is a schematic diagram of a lidar receiving system according to Embodiment 6 of the present invention;
FIG. 22 is a schematic diagram of a lidar receiving system according to Embodiment 6 of the present invention from another perspective;
FIG. 23 is a schematic diagram of a receiving apparatus of a lidar receiving system according to Embodiment 6 of the present invention;
FIG. 24 is a front view of a receiving device according to Embodiment 6 of the present invention;
FIG. 25 is a left view of a receiving device according to Embodiment 6 of the present invention;
FIG. 26 is a schematic diagram of a receiving circuit bracket according to Embodiment 6 of the present invention;
FIG. 27 is a schematic diagram of a receiving circuit bracket according to Embodiment 6 of the present invention from another perspective;
FIG. 28 is a partial schematic structural diagram of a wireless power transmission apparatus according to Embodiment 9 of the utility model;
FIG. 29 is a partial structural front view of a wireless power transmission apparatus according to Embodiment 9 of the utility model;
FIG. 30 is a schematic structural diagram of a lidar according to Embodiment 1 of the utility model;
FIG. 31A is a schematic diagram of a lidar; FIG. 31B is a schematic diagram of an edge-emitting laser emitter chip;
FIG. 31C is a schematic diagram of a configuration of an existing semiconductor laser emitter chip and an existing circuit board;
FIG. 32 is a schematic diagram of another configuration of an existing semiconductor laser emitter chip and an existing circuit board;
FIG. 33A is a three-dimensional diagram of a laser emitter according to a first aspect of the present invention viewed from a front side, FIG. 33B is a three-dimensional diagram of the laser emitter viewed from a rear side, and FIG. 33C and FIG. 33D are respectively renderings of FIG. 33A and FIG. 33B;
FIG. 34A shows angles of divergence of a laser beam emitted by the laser emitter chip in a slow axis direction and in a fast axis direction; FIG. 34B and FIG. 34C show a situation in which an angle of divergence of a laser beam emitted by a laser emitter chip in a fast axis direction decreases after the laser beam passes through a D lens and an optical fiber;
FIG. 35A and FIG. 35B show a laser emitter according to another embodiment of the present invention;
FIG. 36A and FIG. 36B show a laser emitter according to another embodiment of the present invention, and FIG. 36C and FIG. 36D are respectively renderings of FIG. 36A and FIG. 36B;
FIG. 37A and FIG. 37B show variations of the laser emitters according to FIG. 36A and FIG. 36B;
FIG. 38 shows a laser emitter emitting board assembly according to a preferred embodiment of the present invention;
FIG. 39A shows a laser emitter emitting board assembly according to a preferred embodiment of the present invention, and FIG. 39B shows a laser emitter emitting board assembly according to another preferred embodiment of the present invention;
FIG. 40 shows a laser emitter emitting board assembly;
FIG. 41 shows a laser emitter emitting board assembly; and
FIG. 42 shows a method for encapsulating a laser emitter according to the present invention.

The following supplementary description is given to the accompanying drawings.
1-Rotor, 11-Outer cylinder, 111-First mounting plane, 112-Third mounting plane, 113-Upper plane, 1131-First counterweight structure, 114-Movable wall, 1141-First counterweight block, 1142-Arc-shaped portion, 1143-Guide portion, 115-Fixed wall, 12-Inner cylinder, 121-Second mounting plane, 122-Fourth mounting plane, 123-Attachment surface, 13-Emitting chamber, 14-Receiving chamber, 15-Reinforcing strip, 16-separator, 161-Second counterweight structure, 17-First bottom plate, 171-Recessed portion, 1711-First recessed portion, 1712-Second recessed portion, 1713-Third recessed portion, 2-baseplate, 21-Second counterweight block, 3-Pedestal, 31-Drying cavity, 32-Central shaft, 33-Driving apparatus, 34-First bearing, 35-Second bearing, 36-enclosure; 37-Top cap; 41-Light isolation sheet 42-Light isolation frame, 5-Third counterweight structure, 51-First groove, 52-Connecting rib, 6-Conductive component, 7-First through hole, 71-Sealing gasket, 8-Fixed block, 81-Lapping strip, 9-Avoidance groove, 10-Cover plate assembly, 101-First cover plate, 102-Second cover plate, 103-Receiving chamber cover plate;
201-Laser emitting apparatus; 2011-Laser emitter bracket; 20111-Second bottom plate; 201111-First mounting hole; 20112-First side plate; 201121-Comb; 201122-Slot; 2012-Transmitting circuit set; 20121-Transmitting motherboard; 20122-First transmitting daughterboard; 20123-Second transmitting daughterboard; 20124-Third transmitting daughterboard; 2013-Transmitting circuit bracket; 20131-Third bottom plate; 201311-Second mounting hole; 20132-Second side plate; 201321-First side surface; 201322-Second side surface; 20133-Assembling post; 201331-First assembling hole; 20134-Protrusion; 2014-Laser emitter emitting board; 2015-Laser emitter; 20161-First screw; 20162-First nut; 20163-First washer; 20164-Second screw. 202-First mirror set; 2021-First mirror; 2022-Second mirror; 203-Emitting lens set;
301-Receiving lens set; 302-Second mirror set; 3021-Third mirror; 3022-Fourth mirror; 303-Receiving apparatus; 3031-Light filter; 3032-Receiving device; 30321-Substrate; 30323-Protective shell; 3033-Receiving circuit bracket; 30331-Fourth bottom plate; 303311-Protruding plate; 303312-Assembling lug; 303313-Third mounting hole; 30332-Third side plate; 303321-Third side surface; 303322-Fourth side surface; 303323-Second groove; 303324-Second through hole; 303325-Positioning plate; 303326-Second assembling hole; 3034-Receiving circuit board; 30341-First circuit board; 30342-Second circuit board; 30343-Third circuit board; 3035-Third screw; 3036-Second nut; 3037-Second washer; 3038-Fourth screw;
401-Receiving coil; 402-Magnetic isolation board; 4021-Third connecting portion; 4022-Fourth connecting portion; 4023-Third through hole; 403-Receiving circuit board; 4031-Fourth circuit board; 40311-Fourth through hole; 40312-First perforation; 40313-Second perforation; 4032-Fifth circuit board; 40321-First connecting portion; 40322-Second connecting portion; 40323-Glue injection hole; 40324-Fifth through hole; 404-Copper post tube; 4051-Fifth screw; 4052-Third nut; 406-Transmitting coil; 407-Transmitting circuit board.

### DETAILED DESCRIPTION

The technical solutions of the embodiments of the present invention are clearly and completely described in the following with reference to the accompanying drawings of the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The phrase "an embodiment", "one embodiment", or "embodiments" as used herein refers to a particular feature, structure, or characteristic that can be included in at least one implementation of the present invention. In the description of the present invention, it should be understood that orientation or position relationships indicated by the terms such as "upper", "lower", "top", and "bottom" are based on orientation or position relationships shown in the accompanying drawings, and are used only for ease and brevity of illustration and description of the present invention, rather than indicating or implying that the mentioned apparatus or component needs to have a particular orientation or needs to be constructed and operated in a particular orientation. Therefore, such terms should not be construed as limiting of the present invention. In addition, terms "first" and "second" are used merely for the purpose of description, and shall not be construed as indicating or implying relative importance or implying a quantity of indicated technical features. Therefore, a feature limited by "first" or "second" may explicitly or implicitly include one or more of the features. Moreover, the terms "first", "second", and so on are intended to distinguish between similar objects rather than describe a specific order. It is to be understood that data used in this way is exchangeable in a proper case, so that the embodiments of the present disclosure described herein can be implemented in another order except those shown or described herein.

In the description of the present invention, it should be understood that directions or location relationships indicated by terms "center", "longitudinal", "landscape", "length", "width", "thickness", "upper", "lower", "front", "rear", "left", "right", "vertical", "horizontal", "top", "bottom", "inner", "outer", "clockwise", and "counterclockwise" are directions or location relationships shown based on the accompanying drawings, are merely used for the convenience of describing the present invention and simplifying the description, but are not used to indicate or imply that a device or an element must have a particular direction or must be constructed and operated in a particular direction, and therefore, cannot be understood as a limitation to the present invention. In the descriptions of the present invention, unless otherwise explicitly specified, "multiple" means two or more than two.

In the descriptions of the present invention, it should be noted that, unless otherwise specified or defined, the terms such as "mount", "connect", and "connection" should be understood in a broad sense, for example, the connection may be a fixed connection, a detachable connection, or an integral connection; or the connection may be a mechanical connection, or may be an electrical connection or communication with each other; or the connection may be a direct connection, an indirect connection through an intermediary, or internal communication between two components or mutual interaction relationship between two components. The specific meanings of the above terms in the present invention may be understood according to specific circumstances for a person of ordinary skill in the art.

In the present invention, unless otherwise explicitly stipulated and restricted, that a first feature is "on" or "under" a second feature may include that the first and second features are in direct contact, or may include that the first and second features are not in direct contact but in contact by using other features therebetween. In addition, that the first feature is "on", "above", or "over" the second feature includes that the first feature is right above and on the inclined top of the second feature or merely indicates that a level of the first feature is higher than that of the second feature. That the first feature is "below", "under", or "beneath" the second feature includes that the first feature is right below and at the inclined bottom of the second feature or merely indicates that a level of the first feature is lower than that of the second feature.

Many different implementations or examples are provided in the following disclosure to implement different structures of the present invention. To simplify the disclosure of the present invention, components and settings in particular examples are described below. Certainly, they are merely examples and are not intended to limit the present invention. In addition, in the present invention, reference numerals and/or reference letters may be repeated in different examples. The repetition is for the purposes of simplification and clearness, and a relationship. Moreover, the present invention provides examples of various particular processes and materials, but a person of ordinary skill in the art may be aware of application of another process and/or use of another material.

### First aspect

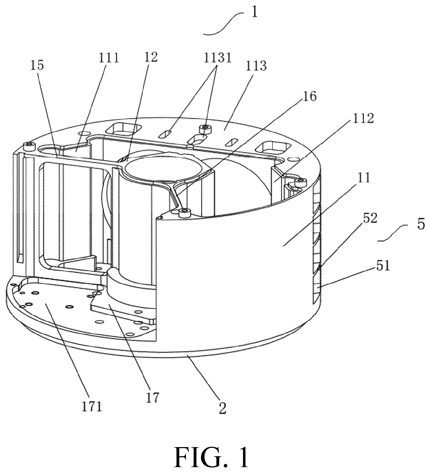

Various embodiments of a first aspect of the present invention relate to a lidar, which are described in detail below with reference to FIG. 1 to FIG. 30.

### Embodiment 1:

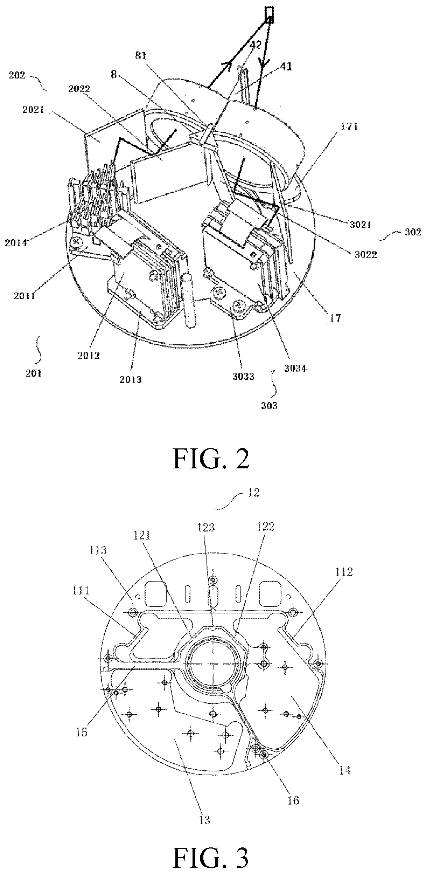

Embodiment 1 relates to a lidar. The lidar includes a rotor 1, a laser emitting system, and a receiving system. The rotor 1 has an emitting chamber 13 and a receiving chamber 14 that are separated from each other (see FIG. 3). The laser emitting system is disposed in the emitting chamber 13, and the receiving system is disposed in the receiving chamber 14. The laser emitting system and the receiving system are described in detail below.

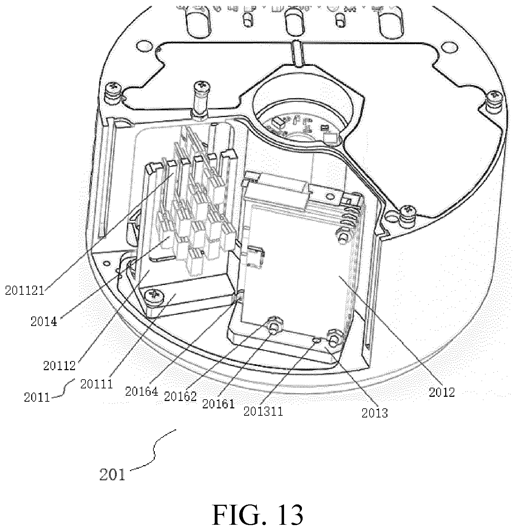

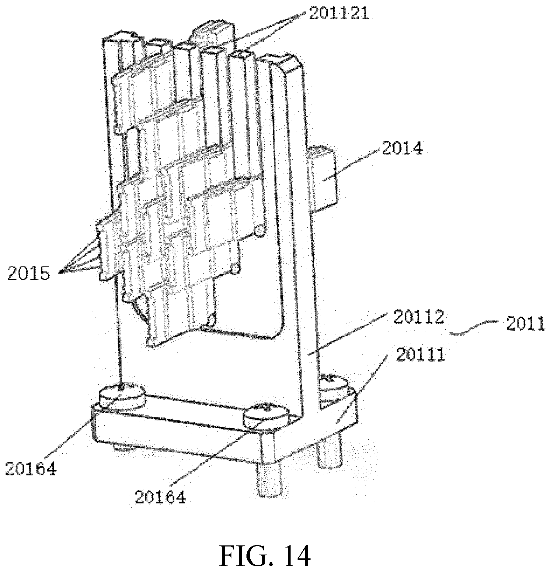

As shown in FIG. 13, the laser emitting system includes a laser emitting apparatus 201. The laser emitting apparatus 201 includes a laser emitter bracket 2011, a transmitting circuit set 2012, a transmitting circuit bracket 2013, and at least one laser emitter emitting board 2014. The laser emitter bracket 2011 may be separated from the transmitting circuit bracket 2013. The laser emitter emitting board 2014 is mounted to the laser emitter bracket 2011, and at least one laser emitter 2015 is disposed on the laser emitter emitting board 2014 (see FIG. 14). The transmitting circuit set 2012 is mounted to the transmitting circuit bracket 2013, and the transmitting circuit set 2012 is electrically connected to the laser emitter emitting board 2014.

The laser emitting apparatus 201 further includes a plurality of flexible electrical connectors. The transmitting circuit set 2012 is connected to the laser emitter emitting board 2014 through the flexible electrical connectors, and the transmitting circuit set 2012 may supply driving signals and power to the laser emitter emitting board 2014 through the flexible electrical connectors.

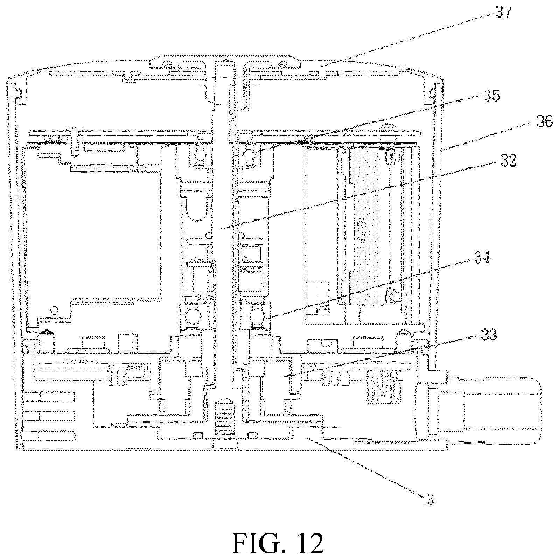

As shown in FIG. 12, the lidar further includes a pedestal 3, an enclosure 36, and a top cap 37. One end of the enclosure 36 is mated with the pedestal 3, and the other end of the enclosure 36 is mated with the top cap 37. The pedestal 3, the enclosure 36, and the top cap 37 are sequentially connected to form an enclosed cavity, which is configured to accommodate the rotor 1, the laser emitting system, and the receiving system.

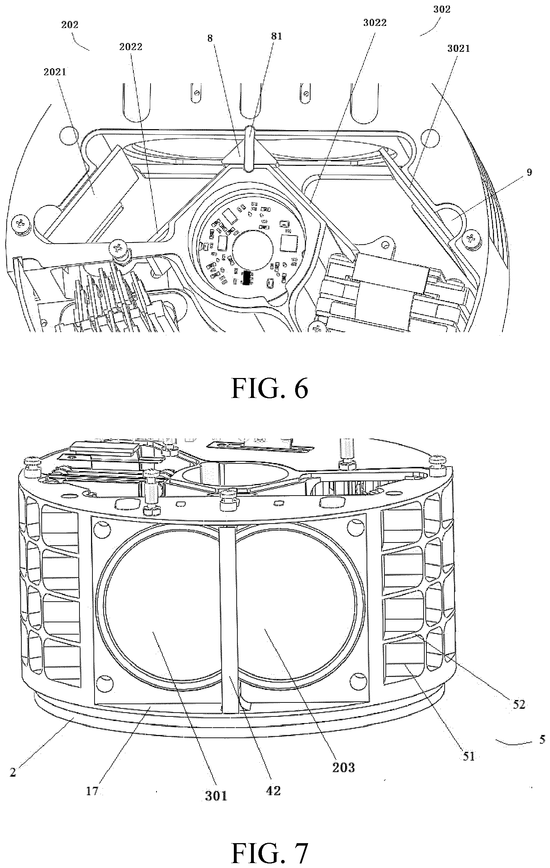

As shown in FIG. 6 and FIG. 7, the laser emitting system further includes a first mirror set 202 and an emitting lens set 203. The first mirror set 202 is configured to receive a laser beam emitted by the laser emitter 2015 and to change a path of the laser beam, so that the laser beam is incident on the emitting lens set 203. The emitting lens set 203 is configured to emit detection light.

As shown in FIG. 6, FIG. 7, and FIG. 21, the receiving system includes a receiving lens set 301, a second mirror set 302, and a receiving apparatus 303. The receiving lens set 301 is configured to converge light reflected from a to-be-detected object, and the second mirror set 302 is configured to change a path of the beam, so that the reflected light is incident on the receiving apparatus 303.

According to a preferred embodiment of the present invention, the emitting chamber 13 and the receiving chamber 14 are asymmetrically distributed. Asymmetrically distributing the emitting chamber and the receiving chamber facilitates proper arrangement of the laser emitting system and the receiving system. As described above, the laser emitting system includes the laser emitter bracket 2011 (on which the laser emitter emitting board 2014 is carried), the transmitting circuit bracket 2013 (on which the transmitting circuit set 2012 is carried), the first mirror set 202, and the emitting lens set 203. A number of the components and a weight are relatively large. The receiving system includes a receiving lens set 301, a second mirror set 302, and a receiving apparatus 303. A number of the components and a weight are relatively small. Therefore, asymmetrically arranging the emitting chamber and the receiving chamber can facilitate uniform distribution of the components in the laser emitting system and the receiving system in the lidar as much as possible, avoiding weight unbalance.

The lidar includes a pedestal 3 and an enclosure 36. The pedestal 3 and the enclosure 36 are mated with each other to form an enclosed cavity. The rotor 1 is disposed on the pedestal 3, and the rotor 1 can rotate relative to the pedestal 3. The lidar further includes a wireless power transmission apparatus. The wireless power transmission apparatus includes a wireless power emitting assembly and a wireless power receiving assembly. The wireless power emitting assembly is disposed on a side of a top of the enclosure 36 facing the pedestal 3, and the wireless power receiving assembly is disposed on a side of the rotor 1 facing the wireless power emitting assembly.

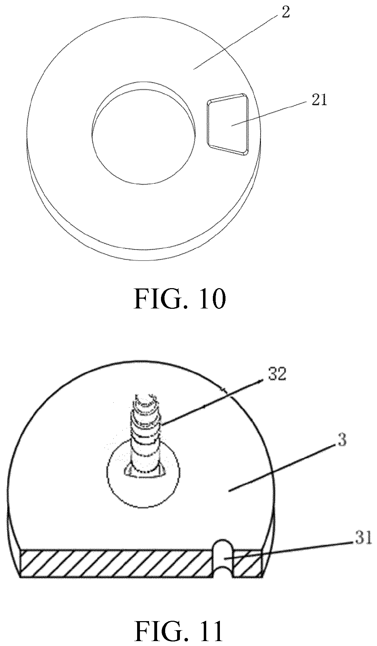

As shown in FIG. 11 and FIG. 12, the lidar further includes a central shaft 32, and a wire groove is provided on a side wall of the central shaft 32. The lidar further includes a plurality of electrical connecting wires. The electrical connecting wires are laid in the wire groove. One end of the electrical connecting wire is connected to the wireless power transmission emitting assembly, and the other end of the electrical connecting wire is connected to a circuit part in the pedestal.

### Embodiment 2:

A second embodiment of the present invention relates to a lidar apparatus, which is described with reference to FIG. 1 to FIG. 12. As shown in FIG. 1, the lidar apparatus includes a rotor 1. The rotor 1 includes an outer cylinder 11 and an inner cylinder 12. A mounting structure for mounting a receiving lens set 301 and an emitting lens set 203 is disposed on a wall of the outer cylinder 11, and a third counterweight structure 5 is distributed on both sides of the mounting structure, which is shown in FIG. 7. The third counterweight structure 5 includes a counterweight structure I and a counterweight structure II. The counterweight structure I and the counterweight structure II both include a plurality of first grooves 51. Preferably, structures of the plurality of first grooves 51 may be the same or different. As a preferred embodiment, the plurality of first grooves 51 forming the third counterweight structure 5 are given by way of example in this embodiment. The third counterweight structure includes 12 first grooves 51. Specifically, 4 rectangular grooves are linearly arranged in a vertical direction of the wall of the outer cylinder 11 and 8 wedge-shaped grooves are symmetrically disposed on both sides of the rectangular grooves. The rectangular grooves have the same depth, and depths of the wedge-shaped grooves gradually increase inward in a radial direction of the rotor 1 in a direction of approaching the rectangular grooves. Specifically, the depths of the rectangular grooves and the gradually changing depths of the wedge-shaped grooves are set according to actual conditions. Further, a connecting rib 52 is formed between two adjacent first grooves 51, which acts as a reinforcing rib, improving overall strength of the rotor 1. Moreover, by disposing the third counterweight structures 5 consisting of the plurality of first grooves 51 on both sides of the mounting structure, a surface area of the wall of the outer cylinder of the rotor 1 is increased, improving a heat dissipation effect of the rotor 1. In addition, the provided first grooves 51 reduce an overall weight of the rotor 1, enabling lightweight of the rotor 1, which effectively reduces energy consumption of the rotor 1 during rotation. Further, different counterweight materials may be flexibly stuffed into the first groove 51 to adjust overall balance of the rotor 1, which improves flexibility of overall balance adjustment for the rotor 1.

As shown in FIG. 7, the third counterweight structure 5 is symmetrically distributed on both sides of the mounting structure for the receiving lens set 301 and the emitting lens set 203 for adjusting the balance of the rotor 1. As described above, the laser emitting system has a large number of components and a relatively large weight, and therefore the laser emitting system side may be relatively heavy and the receiving system side may be relatively light. To this end, an appropriate counterweight may be placed in the first groove 51 of the counterweight structure 5 of the receiving system side. For example, the counterweight is bonded in the first groove 51, so that the rotor 1 achieves weight balance about a rotating shaft thereof, to avoid problems such as vibration or accuracy decrease caused by unbalanced weight during high-speed rotation. Those skilled in the art may select a number, materials, and positions of counterweights as required.

It may be understood that the symmetrical distribution of the third counterweight structure 5 on both sides of the mounting structure is merely a preferred solution, and distribution of the third counterweight structure is not restricted. The third counterweight structure may be disposed at any position on the rotor as required.

Further, as shown in FIG. 1 and FIG. 3, an accommodation cavity is formed between the outer cylinder 11 and the inner cylinder 12, and a separator 16 is disposed in the accommodation cavity. One side of the separator 16 is connected to the outer cylinder 11, and the other side of the separator 16 is connected to the inner cylinder 12. The separator 16 divides the accommodation cavity into an emitting chamber 13 and a receiving chamber 14. Volumes of the emitting chamber 13 and the receiving chamber 14 may not be equal, or the emitting chamber 13 and the receiving chamber 14 may be asymmetrically distributed on the rotor. Specifically, the inner cylinder 12 includes an inner wall of the inner cylinder inner wall and an inner cylinder outer wall. The outer cylinder 11 includes an outer cylinder inner wall and an outer cylinder outer wall. The accommodation cavity is formed between the outer cylinder inner wall and the inner cylinder outer wall, and the outer cylinder inner wall and the inner cylinder outer wall form an inner wall of the accommodation cavity. An avoidance groove 9 is formed on each of the inner cylinder outer wall and the outer cylinder inner wall, which is shown in FIG. 6. It may be understood that a number and positions of avoidance grooves 9 may be set according to assembly positions of assembly components, to avoid assembly interference between the assembly components. A size of the avoidance groove may be determined according to a size of the assembly component. Specifically, in this embodiment, the number and the positions of the avoidance grooves 9 are preferably set based on the assembly positions of the assembly components. Specifically, as shown in FIG. 3, a first mounting plane 111 and a third mounting plane 112 are disposed on the inner wall of the outer cylinder 11, and a second mounting plane 121, a fourth mounting plane 122, and an attachment surface 123 are disposed on the outer wall of the inner cylinder 12. The first mounting plane 111 and the second mounting plane 121 are disposed in the emitting chamber 13, and the third mounting plane 112 and the fourth mounting plane 122 are disposed in the receiving chamber 14. The attachment surface 123 spans the emitting chamber 13 and the receiving chamber 14. The first mounting plane 111 is opposite to the second mounting plane 121. The second mounting plane 121 and the fourth mounting plane 122 are connected through the attachment surface 123. The third mounting plane 112 is opposite to the fourth mounting plane 122. Further, avoidance grooves 9 are disposed on both sides of all of the first mounting plane 111, the second mounting plane 121, the third mounting plane 112, and the fourth mounting plane 122.

As shown in FIG. 6 and FIG. 13, a laser emitting apparatus 201 and a first mirror set 202 are disposed in the emitting chamber 13.

As shown in FIG. 6, the first mirror set 202 includes a first mirror 2021 and a second mirror 2022 for reflecting detection light of the laser emitting apparatus 201 for the second time. Specifically, with reference to FIG. 3 and FIG. 6, the first mirror 2021 is attached to the first mounting plane 111, and the second mirror 2022 is attached to the second mounting plane 121. The avoidance grooves 9 on both sides of the first mounting plane 111 and the second mounting plane 121 provide an avoidance space for mounting the first mirror 2021 and the second mirror 2022, which avoids interference between the first mirror 2021 and the second mirror 2022 and the cylinder walls on both sides of the mounting plane while facilitating the mounting of the first mirror 2021 and the second mirror 2022.

The emitting lens set 203 and the receiving lens set 301 are symmetrically disposed. The emitting lens set 203 is in communication with the emitting chamber 13, and the receiving lens set 301 is in communication with the receiving chamber 14.

As shown in FIG. 6, a second mirror set 302 and a receiving apparatus 303 are disposed in the receiving chamber 14. The second mirror set 302 includes a third mirror 3021 and a fourth mirror 3022 for reflecting, to the receiving apparatus 303 for the second time, reflected light passing through the receiving lens set 301. Specifically, the third mirror 3021 is attached to the third mounting plane 112, and the fourth mirror 3022 is attached to the fourth mounting plane 122. The avoidance grooves 9 on both sides of the third mounting plane 112 and the fourth mounting plane 122 provide an avoidance space for mounting the third mirror 3021 and the fourth mirror 3022, which avoids interference between the third mirror 3021 and the fourth mirror 3022 and the cylinder walls on both sides of the mounting plane while facilitating the mounting of the third mirror 3021 and the fourth mirror 3022.

In the above embodiment, the first mirror set 202 and the second mirror set 302 both include two mirrors. Those skilled in the art easily understand that the protection scope of the present invention is not limited to the specific number of mirrors. One mirror may be included, or more mirrors may be included, which may be determined by those skilled in the art according to specific design requirements of the lidar, for example, a size and an optical performance parameter of the lidar, which all fall within the protection scope of the present invention.

As shown in FIG. 2, FIG. 21, and FIG. 22, the lidar apparatus further includes a light isolation sheet 41 and a light isolation frame 42. The light isolation sheet 41 is configured to isolate the emitting lens set 203 from the receiving lens set 301. One end of the light isolation sheet 41 is disposed between the second mirror 2022 and the fourth mirror 3022, and the other end of the light isolation sheet 41 is attached to the light isolation frame 42.

It may be understood that the light isolation sheet 41 is mainly intended to isolate the emitting lens set 203 from the receiving lens set 301, and its shape includes but is not limited to a rectangular shape, a regular T shape or an irregular T shape. Preferably, a thickness of the light isolation sheet 41 is 2 mm to 5 mm for bearing its own gravity after being mounted, thus avoiding light leakage caused by untight attachment between the emitting lens set 203 and the receiving lens set 301 as a result of bending of the light isolation sheet 41 due to gravity.

As shown in FIG. 1 and FIG. 7, the rotor 1 further includes a first bottom plate 17 and an upper plane 113. One end of the light isolation frame 42 is disposed on the first bottom plate 17 of the rotor 1, and the other end of the light isolation frame 42 is flush with the upper plane 113 of the rotor 1, or may protrude out of the upper plane 113 of the rotor 1. The light isolation frame 42 is preferably a T-shaped structure. After the light isolation sheet 41 and the light isolation frame 42 are mounted, a height of the light isolation frame 42 is higher than that of the light isolation sheet 41, further isolating stray light and inhibiting interference between light.

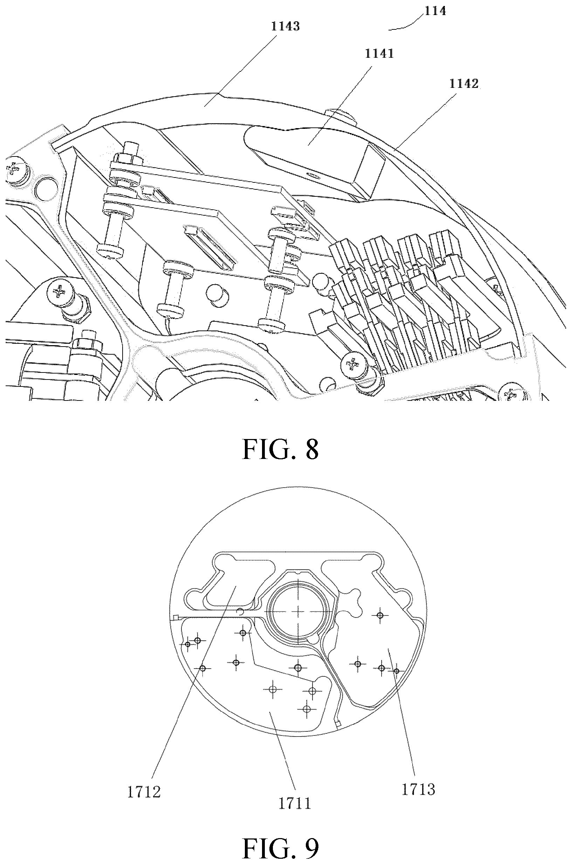

The first bottom plate 17 is configured to seal a gap between a bottom of the inner cylinder 12 and a bottom of the outer cylinder 11. The transmitting circuit bracket 2013, the laser emitter emitting board bracket 2011, and the receiving circuit board bracket 3033 are all disposed on the first bottom plate 17, and their positions on the first bottom plate 17 may be adjusted as required. In a preferred solution, the first bottom plate 17 includes an upper plane and a lower plane, and a recessed portion 171 is disposed on the upper plane, which is shown in FIG. 1. Preferably, as shown in FIG. 9, the upper plane includes a first recessed portion 1711, a second recessed portion 1712, and a third recessed portion 1713. The first recessed portion 1711 and the second recessed portion 1712 are both disposed on the first bottom plate at a bottom of the emitting chamber 13, and the first recessed portion 1711 and the second recessed portion 1712 are disposed on both sides of a reinforcing strip 15 (refer to FIG. 1). The third recessed portion 1713 is disposed on a first bottom plate at a bottom of the receiving chamber 14, and the transmitting circuit bracket 2013, the laser emitter emitting board bracket 2011, and the receiving circuit board bracket 3033 are all disposed in the recessed portion 171. The lower plane of the first bottom plate 17 is also provided with a plurality of recessed portions 171. Preferably, the plurality of recessed portions include a fourth recessed portion, a fifth recessed portion, and a sixth recessed portion in a one-to-one correspondence with the first recessed portion 1711, the second recessed portion 1712, and the third recessed portion 1713. By disposing the recessed portion 171, the overall weight of the rotor 1 can be reduced, enabling lightweight of the rotor 1, thus reducing the energy consumption of the rotor 1 during rotation.

It may be understood that a number and positions of recessed portions 171 on the upper plane and the lower plane of the first bottom plate 17 that are set are merely a preferred solution, and the number and the positions are not limited. The specific positions and number may be set as required.

Further, as shown in FIG. 3 and FIG. 6, the second mirror 2022 is attached to the second mounting plane 121. After the fourth mirror 3022 is attached to the fourth mounting plane 122, a part of the second mirror 2022 extending out of the second mounting plane 121 abuts against a side of the light insulation sheet 41, and a part of the fourth mirror 3022 extending out of the fourth mounting plane 122 abuts against the other side of the light insulation sheet 41. A triangular accommodation space is formed between the extending part of the second mirror 2022 and the extending part of the fourth mirror 3022.

Further, as shown in FIG. 6, a fixed block 8 is further disposed in the accommodation cavity. Preferably, in this embodiment, the fixed block 8 is a triangular structure, and the fixed block 8 includes an upper surface, a lower surface, a first side surface, and a second side surface. A lapping strip 81 is fixedly disposed on the upper surface, and the lower surface abuts against the second mirror 2022 and the fourth mirror 3022. The first side surface is attached to the attachment surface 123, and the second side surface is attached to the inner wall of the outer cylinder 11. One end of the lapping strip 81 is lapped on the inner cylinder 12, and the other end of the lapping strip 81 is lapped on the outer cylinder 11. By disposing the fixed block 8, the reflection chamber 13 is separated from the receiving chamber 14. The fixed block 8 is preferably a triangular structure, which is adapted to the triangular shape of the triangular accommodation space formed between the second mirror 2022 and the fourth mirror 3022. In addition, the fixed block with the triangular structure is disposed above the second mirror 2022 and the fourth mirror 3022, so that a spacing between the mirror and a top of the rotor 1 can be filled, to avoid interference between detection light and received light, thus improving detection accuracy.

Specifically, a principle of the light path is as follows. The laser emitter 2015 of the laser emitting apparatus 201 (refer to FIG. 2) emits a laser beam as detection light, which is sent to the first mirror 2021 and is reflected by the first mirror 2021 to the second mirror 2022. Then, the second mirror 2022 reflects the detection light to the emitting lens set 203, which passes through the emitting lens set 203 and is then irradiated on a to-be-detected object, and the reflected light is reflected to the receiving lens set 301 by the to-be-detected object. The reflected light reflected by the detected object is incident on the third mirror 3021 after passing through the receiving lens set 301, and is reflected to the fourth mirror 3022 by the third mirror 3021, and is then reflected to the receiving apparatus 303 after being reflected by the fourth mirror 3022 for the second time.

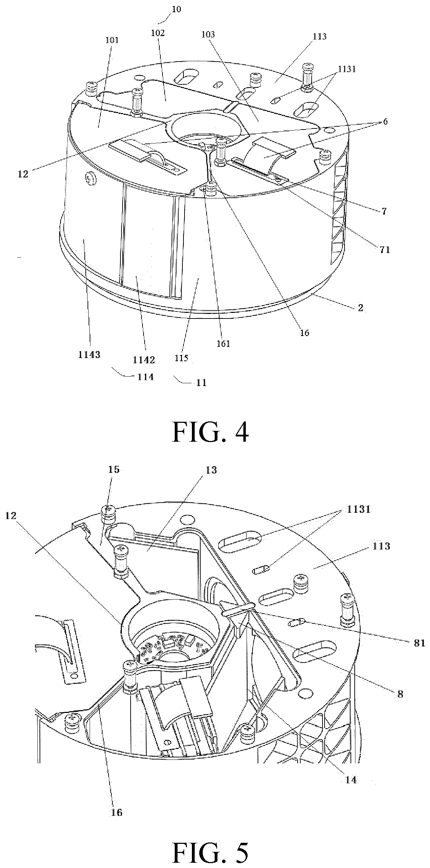

As shown in FIG. 4, the rotor 1 further includes a cover plate assembly 10. The cover plate assembly 10 includes an emitting chamber cover plate and a receiving chamber cover plate 103. The emitting chamber cover plate is covered over the emitting chamber 13, and the receiving chamber cover plate 103 is covered over the receiving chamber 14. Preferably, the emitting chamber cover plate includes a first cover plate 101 and a second cover plate 102. The first cover plate 101 is disposed above the laser emitting apparatus 201, and the second cover plate 102 is disposed above the first mirror set 202.

Further, baffle structures protruding from positions on the first cover plate 101, the second cover plate 102, and the receiving chamber cover plate 103 corresponding to the avoidance grooves 9. Steps for supporting the first cover plate 101, the second cover plate 102, and the receiving chamber cover plate 103 are disposed on a top of the inner wall of the accommodation cavity. Depths of the steps match thicknesses of the first cover plate 101, the second cover plate 102, and the receiving chamber cover plate 103.

As shown in FIG. 4, a first through hole 7 is disposed on the emitting chamber cover plate for a conductive component 6 to pass through, to supply power to the transmitting circuit board 1312. Preferably, the first through hole 7 is disposed on the second cover plate 102 or on the receiving chamber cover plate 103 for the conductive component 6 to pass through. The conductive component 6 is preferably a flexible electrical connector, and a sealing gasket 71 is disposed on the first through hole, to implement sealing of the first through hole, thus avoiding shaking of the conductive component 6 during rotation of the rotor 1, and improving stability of circuit transmission.

Further, in this embodiment, as a preferred solution, a reinforcing strip 15 is further disposed in the accommodation cavity, which is shown in FIG. 1. One end of the reinforcing strip 15 is connected to the outer cylinder 11, and the other end of the reinforcing strip 15 is connected to the inner cylinder 12. The reinforcing strip 15 and the separator 16 are disposed at a specific angle relative to each other. Preferably, a value of the angle between the reinforcing strip 15 and the separator 16 is from 120° to 150°. Disposing the reinforcing strip 15 facilitates improvement of strength of the rotor 1, especially strength of the emitting chamber 13. Specifically, the reinforcing strip 15 separates the emitting apparatus 201 and the first mirror set 202 on both sides of the reinforcing strip. The reinforcing strip 15 and the separator 16 separate the wall of the outer cylinder 11 into a movable wall 114 and a fixed wall 115. As shown in FIG. 4, the movable wall 114 and the fixed wall 115 are detachably connected. Preferably, the movable wall 114 is snap-fitted to the fixed wall 115. Specifically, the fixed wall 115 is a major arc structure, including a first open end and a second open end. The first open end and the second open end are both provided with a slot structure. The movable wall 114 is a minor arc structure mated with the fixed wall 115 with the major arc structure, including a first connecting end and a second connecting end. The first connecting end and the second connecting end are snap-fitted to the slot structure. The separator 16 separates the accommodation cavity into an emitting chamber 13 and a receiving chamber 14. The emitting chamber 13 and the receiving chamber 14 may have different volumes and are asymmetrically distributed.

It may be understood that the movable wall 114 is not restricted to be snap-fitted to the fixed wall 115, and may also be connected through threads or riveting. The above snap-fit is merely a preferred embodiment, and the connection between the movable wall and the fixed wall is not limited.

Dividing the wall of the outer cylinder 11 into a movable wall 114 and a fixed wall 115 through the reinforcing strip 15 and the separator 16 facilitates the mounting of the laser emitting apparatus 201 while improving the overall injection molding process of the rotor 1.

The movable wall 114 is made of copper, aluminum alloy or other materials with a good heat dissipation effect and a specified hardness, and the fixed wall 115 is made of aluminum alloy.

Further, as shown in FIG. 4 and FIG. 8, the movable wall 114 includes an arc-shaped portion 1142 and a guide portion 1143. The arc-shaped portion 1142 and the guide portion 1143 are smoothly connected. The guide portion 1143 has a non-uniform wall thickness, and the arc-shaped portion 1142 has a uniform wall thickness.

As a preferred solution, a minimum wall thickness of the guide portion 1143 is greater than a wall thickness of the arc-shaped portion 1142. The guide portion 1143 is a streamlined structure, which can reduce the resistance for the rotor 1 during rotation. In addition, the movable wall 114 is made of materials such as copper, copper-aluminum alloy, or the like, which can accelerate dissipation of heat generated by the transmitting circuit board 1312 during operation. By manufacturing the fixed wall 115 with aluminum alloy, the weight of the rotor 1 can be reduced.

Further, as shown in FIG. 8, at least one first counterweight block 1141 is disposed on the movable wall 114.

As a preferred solution, in this embodiment, one first counterweight block 1141 is disposed on the movable wall 114. The first counterweight block 1141 is disposed at a joint between the guide portion 1143 and the arc-shaped portion 1142 of the movable wall 114, and the first counterweight block 1141 is disposed close to a top of the movable wall 114.

The first counterweight block 1141 is a hammer-shaped structure, which includes a front end and a rear end. A thickness of the front end is less than a thickness of the rear end. The front end is disposed close to the guide portion 1143, and the rear end is disposed close to the arc-shaped portion 1142. The first counterweight block 1141 is threadably connected to the movable wall 114.

Further, as shown in FIG. 1 and FIG. 2, the lidar further includes a baseplate 2. The baseplate 2 is configured to support the rotor 1. FIG. 10 shows the baseplate 2. As shown in the figure, at least one second counterweight block 21 is disposed on the baseplate 2. The second counterweight block 21 is accommodated in the recessed portion on the lower plane of the first bottom plate 17 of the rotor 1.

As a preferred solution, in this embodiment, there is one second counterweight block 21. The second counterweight block 21 is disposed below the light receiving member of the optical assembly.

The first counterweight block 1141 and the second counterweight block 21 are disposed to adjust the balance of the rotor 1.

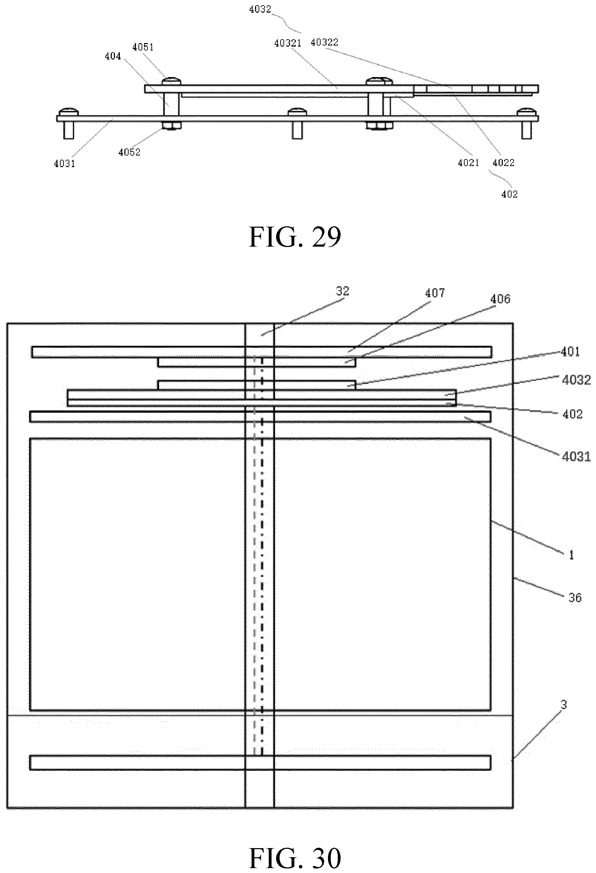

Further, as shown in FIG. 30 and FIG. 11, the lidar further includes a rotor pedestal 3. The baseplate is disposed on the pedestal 3. A central shaft 32 is disposed on the rotor pedestal 3. The rotor 1 is sleeved on the central shaft 32, and the rotor 1 rotates about the central shaft 32. The rotor pedestal 3 is further provided with a drying bin for placing desiccant. The rotor pedestal 3 is further provided with a driving apparatus 33 for driving the rotor 1 to rotate, which is shown in FIG. 12. Preferably, the driving apparatus 33 is a motor. The motor includes a motor rotor and a motor stator. The motor stator is fixedly disposed on the central shaft 32, and the motor rotor is connected to the rotor 1. In addition, an inner surface of the motor rotor is opposite to an outer surface of the motor stator.

Further, as shown in FIG. 12, a first bearing 34 and a second bearing 35 are disposed between the central shaft 32 and the inner cylinder of the rotor 1 of the lidar for supporting the rotation of the rotor 1. Specifically, the first bearing 34 is disposed between the rotor pedestal 3 of the lidar and the inner cylinder of the rotor 1, and is connected to the central shaft 32. The second bearing 35 is disposed on a top of the inner cylinder of the rotor 1 and is connected to the central shaft 32. In this embodiment, a driving force is provided for the rotation of the rotor 1 through the driving apparatus 33, and the rotation of rotating components are jointly supported by the first bearing 34 and the second bearing 35, which reduce a friction coefficient during the motion of the rotor 1 and maintain the rotor 1 to be stable during rotation, thus ensuring rotation accuracy of the rotor, and overcome problems in the prior art such as a low scanning speed and poor rotation stability caused by the use of a single bearing to support the rotation of rotating components, so that the laser ranging achieves a best effect. In addition, a scanning speed can also be increased, thus improving operating efficiency of the lidar.

Further, as shown in FIG. 4, a plurality of first counterweight structures 1131 are disposed on the upper plane 113 of the rotor 1.

As a preferred solution, the first counterweight structure 1131 includes a plurality of counterweight slots and a plurality of counterweight holes. The plurality of counterweight slots are disposed at intervals, and the plurality of counterweight holes are symmetrically disposed on both sides of the counterweight slots.

As a preferred solution, the counterweight slots include a first counterweight slot and a second counterweight slot. The first counterweight slot is separated from the second counterweight slot, and the first counterweight slot and the second counterweight slot have the same shape but unequal sizes. Preferably, in this embodiment, the first counterweight slot and the second counterweight slot are both waist-shaped structures, and the first counterweight slot and the second counterweight slot have the same slot depth. Center lines of the first counterweight slot and the second counterweight slot overlap, and an arc radius of the waist-shaped structure of the first counterweight slot is twice an arc radius of the waist-shaped structure of the second counterweight slot.

Preferably, there are 3 first counterweight slots and 3 second counterweight slots, and the first counterweight slots are separated from the second counterweight slots.

Two counterweight holes are symmetrically disposed on both sides of the counterweight slots.

Further, as shown in FIG. 4, a second counterweight structure 161 is disposed on the separator 16. The second counterweight structure 161 is disposed close to the wall of the outer cylinder 11.

As a preferred solution, the second counterweight structure 161 is a round hole structure.

The first counterweight structure 1131 and the second counterweight structure 161 are disposed, so that the balance adjustment of the rotor 1 is implemented while reducing the weight of the rotor 1. In addition, counterweight materials may be added to the first counterweight structure 1131 and the second counterweight structure 161 composed of slots or holes, to further implement balance adjustment of the rotor 1.

Numbers, shapes, and arrangement positions of the first counterweight structures 1131 and the second counterweight structures 161 described above are merely a preferred implementation and are not limited. In other optional embodiments, the first counterweight structures 1131 may also all be counterweight slot structures. The counterweight slot structures may be the same rectangular structure, different rectangular structures, or a combination of waist-shaped structures and rectangular structures. A specific shape of the first counterweight structure may be set according to process and counterweight requirements. Similarly, the second counterweight structures 161 may also be the same rectangular structure or different rectangular structures or waist-shaped structures. A specific structure of the second counterweight structure may be set according to process and counterweight requirements.

### Embodiment 3:

With reference to FIG. 13 to FIG. 17, a laser emitting apparatus according to the present invention includes a laser emitter bracket 2011, a transmitting circuit set 2012, a transmitting circuit bracket 2013, at least one laser emitter emitting board 2014, and a plurality of flexible electrical connectors.

The laser emitter bracket 2011 is separated from the transmitting circuit bracket 2013, the laser emitter emitting board 2014 is mounted to the laser emitter bracket 2011, and at least one laser emitter 2015 is disposed on the laser emitter emitting board 2014.

The transmitting circuit set 2012 is mounted to the transmitting circuit bracket 2013, and the transmitting circuit set 2012 is connected to the laser emitter emitting board 2014 through the flexible electrical connector for supplying a driving signal and power to the laser emitter emitting board 2014.

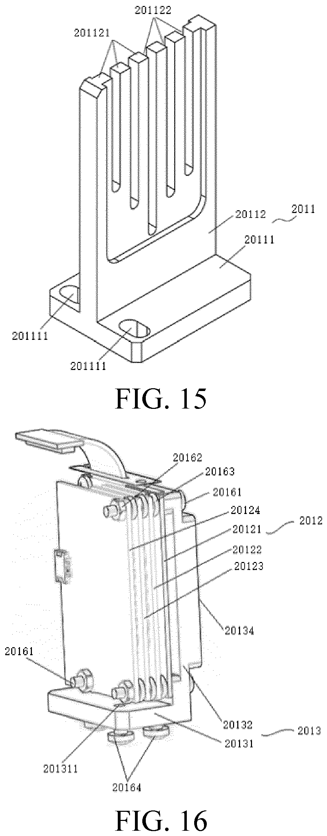

As shown in FIG. 14 and FIG. 15, the laser emitter bracket 2011 includes a second bottom plate 20111 and a first side plate 20112. The second bottom plate 20111 is connected to the first side plate 20112, and the first side plate 20112 has a plurality of combs 201121 disposed side by side. Slots 201122 for mounting the laser emitter emitting board 2014 are formed between two adjacent combs 201121. The laser emitter emitting board 2014 is inserted into the slot 201122, and the laser emitter emitting board 2014 is connected to the first side plate 20112.

The laser emitter emitting board 2014 is glued to the first side plate 20112, for example, by adopting a hot melt adhesive.

The laser emitter bracket 2011 is, for example, T-shaped. The slots 201122 have the same width. Two adjacent slots 201122 have unequal lengths. The laser emitter emitting board 2014 is at a first preset angle to a horizontal plane.

A plurality of laser emitters 2015 are provided for one laser emitter emitting board 2014. Light-emitting surfaces of the laser emitters 2015 are located on a focal plane of an optical exit system of the lidar. The plurality of laser emitter emitting boards 2014 are arranged at different heights on the first side plate 20112 in a vertical direction.

The plurality of the laser emitters 2015 are disposed at one end of the laser emitter emitting board 2014 at intervals. The plurality of laser emitters 2015 are arranged into an emitting array, and the plurality of laser emitters 2015 are disposed at different heights on the first side plate 20112 in the vertical direction. The laser emitters 2015 in the emitting array are non-uniformly distributed. As shown in FIG. 14, the laser emitters 2015 in the emitting array are sparsely distributed at two ends and densely distributed at a middle part in the vertical direction. Length directions of the slots 201122 are in a vertical direction of the first side plate 20112. The vertical direction of the first side plate is consistent with a vertical direction of the lidar.

The laser emitter bracket 2011 is made of aluminum alloy or copper, for example. Preferably, the slots 201122 have different depths. After the laser emitter emitting board 2014 is fixed in the slot, a position of the light-emitting surface of the laser emitter 2015 on the laser emitter emitting board 2014 is determined. Preferably, the light-emitting surfaces of the laser emitters on the plurality of laser emitter emitting boards 2014 are located at different vertical heights of the focal plane of the optical exit system of the lidar. Those skilled in the art may easily understand that the heights of the plurality of laser emitter emitting boards 2014 may be the same or different, numbers of laser emitters on all of the emitting boards may be the same or different, and formed exit beams may be uniformly distributed or non-uniformly distributed.

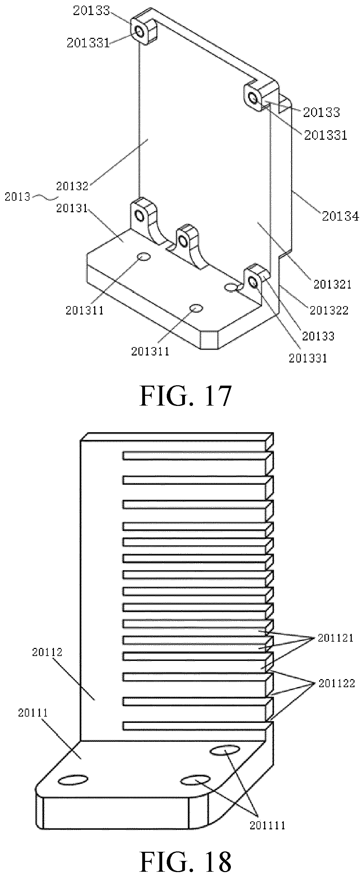

As shown in FIG. 17, the transmitting circuit bracket 2013 is L-shaped, for example, and the transmitting circuit bracket 2013 includes a third bottom plate 20131 and a second side plate 20132. The third bottom plate 20131 and the second side plate 20132 are connected, the second side plate 20132 has a first side surface 201321 and a second side surface 201322, and the transmitting circuit set 2012 is mounted to a side of the first side surface 201321.

The first side plate 20112 is at a second preset angle to the second side plate 20132.

A plurality of assembling posts 20133 are provided on the first side surface 201321, and the assembling posts 20133 are provided with first assembling holes 201331 for mounting the transmitting circuit set 2012.

As shown in FIG. 17, two assembling posts 20133 are disposed at intervals on a top end of the first side surface 201321, and three assembling posts 20133 are disposed at intervals on a bottom end of the first side surface 201321.

As shown in FIG. 13 and FIG. 16, the laser emitting apparatus further includes a first screw 20161, a first nut 20162, and a first washer 20163. The first washer 20163 is sleeved on the first screw 20161, and the first screw 20161 is mated with the first nut 20162.

As shown in FIG. 16, the transmitting circuit set 2012 includes a transmitting motherboard 20121 and a plurality of transmitting daughterboards. The transmitting motherboard 20121 is separated from the plurality of transmitting daughterboards.

Adjacent transmitting daughterboards are connected through electrical connectors. The transmitting daughterboards include a first transmitting daughterboard 20122, a second transmitting daughterboard 20123, and a third transmitting daughterboard 20124. The first transmitting daughterboard 20122 and the transmitting motherboard 20121 are connected through electrical connectors. Specifically, the electrical connectors may be flexible connection and/or rigid connection through docking of plugs and sockets.

As shown in FIG. 16, the first screw 20161 is threaded through the first assembling hole 201331, the transmitting motherboard 20121, the first transmitting daughterboard 20122, the second transmitting daughterboard 20123, and the third transmitting daughterboard 20124, and is mated with the first nut 20162.

As shown in FIG. 16, the transmitting motherboard 20121 is separated from the first transmitting daughterboard 20122 by the first washer 20163. The first transmitting daughterboard 20122 is separated from the second transmitting daughterboard 20123 through the first washer 20163. The second transmitting daughterboard 20123 is separated from the transmitting motherboard 20121 through the first washer 20163. A spacing between the plurality of transmitting daughterboards and a spacing between the transmitting daughterboard and the transmitting motherboard 20121 may be adjusted through a thickness of the first washer 20163.

The first washer 20163 is made of an insulator material such as plastics, ceramics, or the like.

The laser emitting apparatus further includes a plurality of second screws 20164. With reference to FIG. 13, FIG. 16, and FIG. 17, a corner of a side of the transmitting motherboard 20121 close to the laser emitter bracket 2011 is fixed to a corresponding assembling post 20133 through the second screw 20164. A width of the third transmitting daughterboard 20124 is less than a width of the transmitting motherboard 20121. Widths of the first transmitting daughterboard 20122 and the second transmitting daughterboard 20123 are located between the width of the transmitting motherboard 20121 and the width of the third transmitting daughterboard 20124. The width of the transmitting motherboard 20121 is different from the widths of the plurality of transmitting daughterboards, helping give an assembling space and connect the transmitting circuit set 2012 to the laser emitter emitting board 2014 through the flexible electrical connector.

As shown in FIG. 16 and FIG. 17, the second side surface 201322 is provided with a protrusion 20134, which facilitates heat dissipation and adjustment of the counterweight of the lidar.

As shown in FIG. 15, a plurality of first mounting holes 201111 for fixing the laser emitter bracket 2011 are disposed on the second bottom plate 20111, and the second bottom plate 20111 is fixed to the rotor of the lidar through the second screw 20164.

As shown in FIG. 15, there are three first mounting holes 201111. The first mounting holes 201111 are distributed at three corners of the second bottom plate 20111.

As shown in FIG. 15 and FIG. 16, a corner edge of the second bottom plate 20111 is provided with a first chamfer. The first chamfer is a straight chamfer, an arc chamfer, or a right-angle chamfer.

As shown in FIG. 17 and FIG. 18, a plurality of second mounting holes 201311 for fixing the transmitting circuit bracket 2013 are disposed on the third bottom plate 20131. The third bottom plate 20131 is fixed to the rotor of the lidar through the second screw 20164.

There are three mounting holes on the third bottom plate 20131.

A corner edge of the third bottom plate 20131 is provided with a second chamfer.

The second chamfer is a straight chamfer, an arc chamfer or a right-angle chamfer.

The laser emitter bracket 2011 is an integrally formed structure.

The transmitting circuit bracket 2013 is an integrally formed structure.

The laser emitter bracket 2011 and the transmitting circuit bracket 2013 are both made of any or a combination of copper, molybdenum, and aluminum.

The transmitting circuit set 2012 is provided with a plurality of driving circuits. The driving circuits are connected to the plurality of laser emitters 2015 to drive the plurality of laser emitters 2015 to emit light.

Each of the driving circuits drives one or more of the laser emitters 2015.

The transmitting circuit set 2012 is further provided with a laser emitter control module. The laser emitter control module is configured to control the driving circuit to drive corresponding laser emitter 2015 to emit light.

In addition, the lengths of two adjacent slots 201122 may also be equal, and the laser emitters 5 in the emitting array may also be uniformly distributed.

The laser emitting apparatus according to the present invention adopts the laser emitter bracket and the transmitting circuit bracket to respectively mount the laser emitter emitting board and the transmitting circuit set, so that the space in the emitting chamber of the lidar is more flexible, and a volume of the laser emitter emitting board can be reduced, thus reducing a size and a weight of the system, which facilitates implementation of low costs and miniaturization of the lidar.

The laser emitter array of the laser emitting apparatus according to the present invention may be non-uniformly distributed. When the laser beam is non-uniformly distributed and is designed with a relatively small number of laser beams, a relatively high vertical angular resolution can be achieved, thus reducing costs and the volume.

### Embodiment 4:

Referring to FIG. 13 and FIG. 14, a laser emitting apparatus includes a laser emitter bracket 2011, a transmitting circuit set 2012, a transmitting circuit bracket 2013, at least one laser emitter emitting board 2014, and a plurality of flexible electrical connectors. The laser emitter bracket 2011 is separated from the transmitting circuit bracket 2013. The laser emitter emitting board 2014 is mounted to the laser emitter bracket 2011, and at least one laser emitter 2015 is disposed on the laser emitter emitting board 2014. The transmitting circuit set 2012 is mounted to the transmitting circuit bracket 2013, and the transmitting circuit set 2012 is connected to the laser emitter emitting board 2014 through the flexible electrical connectors.

As shown in FIG. 18, the laser emitter bracket 2011 includes a second bottom plate 20111 and a first side plate 20112. The second bottom plate 20111 is connected to the first side plate 20112, and the first side plate 20112 has a plurality of combs 201121 disposed side by side. Slots 201122 for mounting the laser emitter emitting board 2014 are formed between two adjacent combs 201121. The laser emitter emitting board 2014 is inserted into the slot 201122, and the laser emitter emitting board 2014 is connected to the first side plate 20112.

The laser emitter emitting board 2014 is glued to the first side plate 20112.

The laser emitter bracket 2011 is L-shaped. The slots 201122 have the same width. Two adjacent slots 201122 have an equal length. The laser emitter emitting board 2014 is at a first preset angle to a horizontal plane.

A plurality of laser emitters 2015 are provided for one laser emitter emitting board 2014. Light-emitting surfaces of the laser emitters 2015 are located on a focal plane of an optical exit system of the lidar. The plurality of laser emitter emitting boards 2014 are arranged at different heights on the first side plate 20112 in a vertical direction.

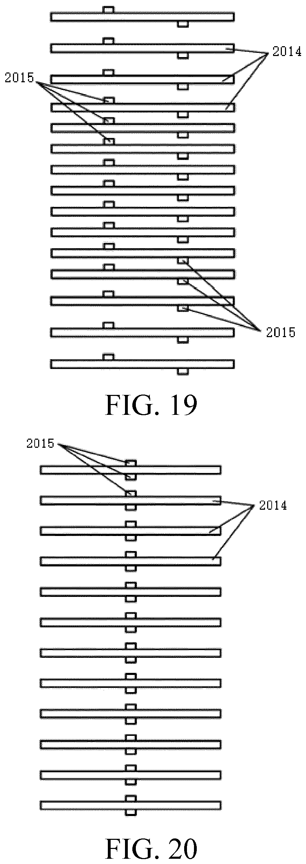

As shown in FIG. 19, the plurality of laser emitters 2015 are disposed at one end of the laser emitter emitting board 2014 at intervals. The plurality of laser emitters 2015 are arranged into an emitting array, and the plurality of laser emitters 2015 are disposed at different heights on the first side plate 20112 in a vertical direction.

Length directions of the slots 201122 are in a horizontal direction of the first side plate 20112. A width direction of the first side plate is consistent with a horizontal direction of the lidar.

As shown in FIG. 19, the plurality of laser emitter emitting boards 2014 are disposed in parallel at intervals, the plurality of laser emitters 2015 are oppositely disposed on two opposite side surfaces of the laser emitter emitting board 2014, and the plurality of laser emitters 2015 are distributed at one end edge of the laser emitter emitting board 2014 facing an optical exit system of the lidar.

As shown in FIG. 19, distances between adjacent laser emitter emitting boards 2014 are unequal, and the laser emitters 2015 in the emitting array are sparsely distributed at two ends and densely distributed at a middle part in a vertical direction. The laser emitter emitting boards 2014 are parallel to the horizontal plane, and the adjacent laser emitter emitting boards 2014 correspond to each other in the vertical direction.

Same as Embodiment 3, as shown in FIG. 16 and FIG. 17, the transmitting circuit bracket 2013 is L-shaped, and the transmitting circuit bracket 2013 includes a third bottom plate 20131 and a second side plate 20132. The third bottom plate 20131 is connected to the second side plate 20132, and the second side plate 20132 has a first side surface 201321 and a second side surface 201322. The transmitting circuit set is mounted to a side of the first side surface 201321.

The first side plate 20112 is at a second preset angle to the second side plate 20132. A plurality of assembling posts 20133 are provided on the first side surface 201321, and the assembling posts 20133 are provided with first assembling holes 201311 for mounting the transmitting circuit set 2012. Two assembling posts 20133 are disposed at intervals on a top end of the first side surface 201321, and three assembling posts 20133 are disposed at intervals on a bottom end of the first side surface 201321.

The laser emitting apparatus further includes a first screw 20161, a first nut 20162, and a first washer 20163. The first washer 20163 is sleeved on the first screw 20161, and the first screw 20161 is mated with the first nut 20162.

The transmitting circuit set 2012 includes a transmitting motherboard 20121 and a plurality of transmitting daughterboards. The transmitting motherboard 20121 is separated from the plurality of transmitting daughterboards.

The adjacent transmitting daughterboards are connected through the flexible electrical connectors. The transmitting daughterboards include a first transmitting daughterboard 20122, a second transmitting daughterboard 20123, and a third transmitting daughterboard 20124. The first transmitting daughterboard 20122 and the transmitting motherboard 20121 are connected through the flexible electrical connectors.

The first screw 20161 is threaded through the first assembling holes 201311, the transmitting motherboard 20121, the first transmitting daughterboard 20122, the second transmitting daughterboard 20123, and the third transmitting daughterboard 20124, and is mated with the first nut 20162.

The transmitting motherboard 20121 is separated from the first transmitting daughterboard 20122 through the first washer 20163. The first transmitting daughterboard 20122 is separated from the second transmitting daughterboard 20123 through the first washer 20163. The second transmitting daughterboard 20123 is separated from the transmitting motherboard 20121 through the first washer 20163.

A spacing between the plurality of transmitting daughterboards and a spacing between the transmitting daughterboard and the transmitting motherboard 20121 may be adjusted through a thickness of the first washer 20163. The first washer 20163 is made of an insulator material such as plastics, ceramics, or the like.

The laser emitting apparatus further includes a plurality of second screws 20164. A corner of a side of the transmitting motherboard 20121 close to the laser emitter bracket 2011 is fixed to a corresponding assembling post 20133 through the second screw 20164. A width of the third transmitting daughterboard 20124 is less than a width of the transmitting motherboard 20121. Widths of the first transmitting daughterboard 20122 and the second transmitting daughterboard 20123 are located between the width of the transmitting motherboard 20121 and the width of the third transmitting daughterboard 20124. The width of the transmitting motherboard 20121 is different from the widths of the plurality of transmitting daughterboards, helping give an assembling space and connect the transmitting circuit set 2012 to the laser emitter emitting board 2014 through the flexible electrical connector and/or a rigid electrical connector. Specifically, the rigid electrical connector is a plug and socket.

The second side surface 201322 is provided with a protrusion 20134, which facilitates heat dissipation and adjustment of the counterweight of the lidar. A plurality of first mounting holes 201111 for fixing positions of the laser emitter bracket 2011 are disposed on the second bottom plate 20111, and the second bottom plate 20111 is fixed to the rotor of the lidar through the second screw 20164. There are three mounting holes. The first mounting holes 201111 are distributed at three corners of the second bottom plate 20111.

The second bottom plate 20111 is provided with a first chamfer. The first chamfer is a straight chamfer, an arc chamfer, or a right-angle chamfer.

A plurality of second mounting holes 201311 for fixing positions of the transmitting circuit bracket 2013 are disposed on the third bottom plate 20131. The third bottom plate 20131 is fixed to the rotor of the lidar through the second screw 20164. There are three mounting holes on the third bottom plate 20131.

The third bottom plate 20131 is provided with a second chamfer. The second chamfer is an arc chamfer.

The laser emitter bracket 2011 is an integrally formed structure. The transmitting circuit bracket 2013 is an integrally formed structure. The laser emitter bracket 2011 and the transmitting circuit bracket 2013 are both made of any or a combination of copper, molybdenum, and aluminum.

The transmitting circuit set 2012 is provided with a plurality of driving circuits. The driving circuits are connected to the plurality of laser emitters 2015 to drive the plurality of laser emitters 2015 to emit light.

Each of the driving circuits drives one or more of the laser emitters 2015. The transmitting circuit set 2012 is further provided with a laser emitter control module. The laser emitter control module is configured to control the driving circuit to drive corresponding laser emitter 2015 to emit light.

In addition, lengths of two adjacent slots 201122 may also be unequal.

### Embodiment 5:

As shown in FIG. 18, a difference between this embodiment and Embodiment 4 is that the plurality of laser emitter emitting boards 2014 are disposed in parallel at intervals, and the laser emitters 2015 are oppositely disposed on the laser emitter emitting board 2014. Distances between adjacent laser emitter emitting boards 2014 are equal. The laser emitter emitting boards 2014 are parallel to the horizontal plane, and the adjacent laser emitter emitting boards 2014 correspond to each other in the vertical direction.

### Embodiment 6:

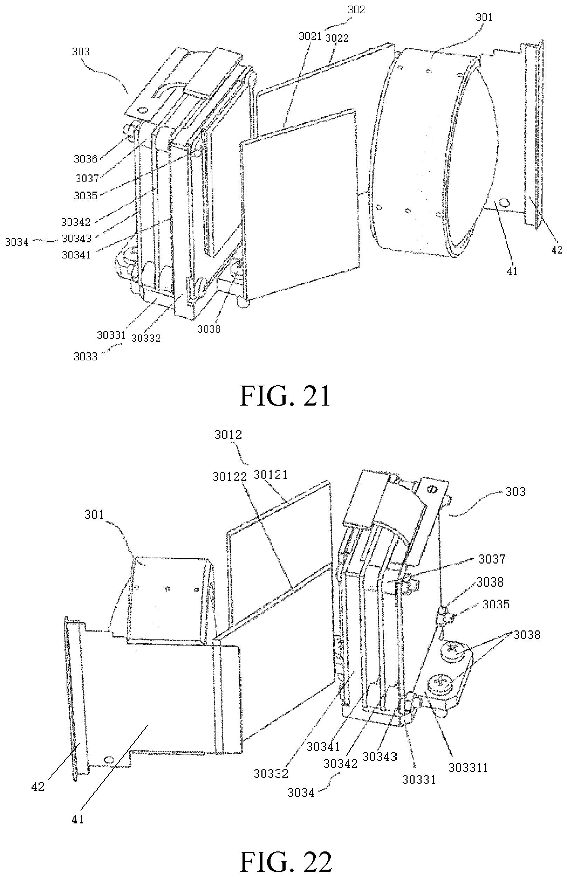

As shown in FIG. 21 and FIG. 22, a receiving system for a lidar includes a receiving lens set 301, a second mirror set 302, and a receiving apparatus 303.

The receiving lens set 301 is configured to converge light reflected from a target object.

The second mirror set 302 is configured to change a path of a beam and cause the reflected light to be incident on the receiving apparatus 303.

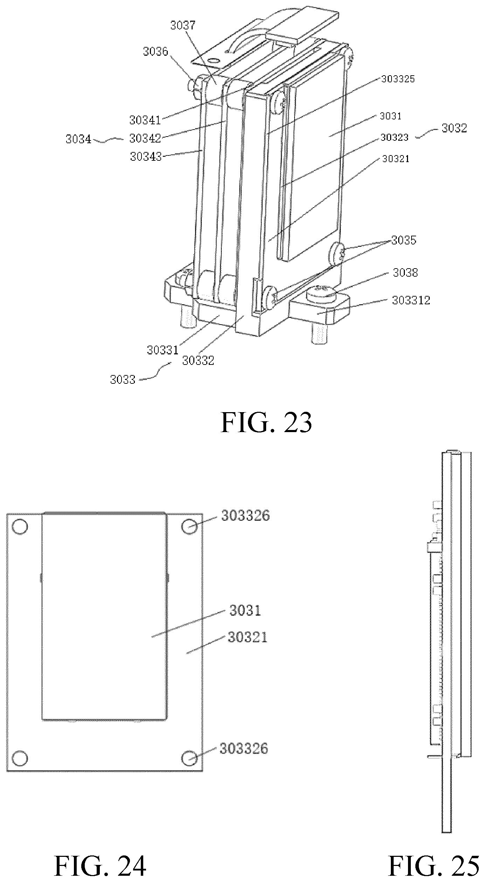

The receiving apparatus 303 includes a light filter 3031, a receiving device 3032, a receiving circuit bracket 3033, and a plurality of receiving circuit boards 3034 (see FIG. 23). The receiving device 3032 and the receiving circuit boards 3034 are mounted to the receiving circuit bracket 3033, and the light filter 3031 is disposed on a side of the receiving device 3032 facing the second mirror set 302 for filtering stray light. Rays of light of various wavelengths can enter the receiving lens set 301 and be reflected to the receiving apparatus 303 through the second mirror set 302. Only a ray of light with a specific wavelength in the incident rays of light represents useful reflected light, that is, a ray of light with a wavelength corresponding to a wavelength of the laser emitter 2015 is signal light, and rays of light with other wavelengths is interference light or stray light. Therefore, the light filter 3031 may cause only the ray of light with the wavelength corresponding to the wavelength of the laser emitter 2015 to pass through, and the rays of light with other wavelengths to be blocked and filtered out, thereby increasing a signal-to-noise ratio of the lidar and improving ranging performance. The receiving device 3032 is configured to obtain distance information and to convert a received optical signal into an electrical signal. The receiving circuit board 3034 is configured to process the distance information obtained by the receiving device 3032.

With reference to FIG. 23 to FIG. 25, the receiving device 3032 includes a substrate 30321, an APD array detector (not shown in the figure), and a protective shell 30323. The substrate 30321 is fixed to the receiving circuit bracket 3033. The APD array detector is disposed on a side surface of the substrate 30321. The protective shell 30323 is covered on the APD array detector, and the protective shell 30323 is mounted on the substrate 30321.

With reference to FIG. 23 to FIG. 25, the light filter 3031 is attached and mounted on a side surface of the protective shell 30323 away from the APD array detector.

The APD array detector is a planar-array APD detector, which consists of planar-array avalanche photodiodes arranged in an M × N array, such as 4 × 4, 4 × 8, 8 × 8, or the like, where M ≥ 2 and N ≥ 2. An optical signal is converted into an electrical signal through an avalanche effect of the photodiodes. Specifically, the M × N arrangement depends on the arrangement of laser emitters in the lidar.

The protective shell 30323 is made of metal.

The receiving apparatus 303 further includes a flexible electrical connector. Two adjacent receiving circuit boards 3034 are connected through the flexible electrical connector.

With reference to FIG. 23, FIG. 26, and FIG. 27, the receiving circuit bracket 3033 includes a fourth bottom plate 30331 and a third side plate 30332. The fourth bottom plate 30331 is connected to the third side plate 30332, and the third side plate 30332 has a third side surface 303321 and a fourth side surface 303322. The plurality of receiving circuit boards 3034 are sequentially mounted on the third side surface 303321 at intervals. The receiving device 3032 is mounted on the fourth side surface 303322.

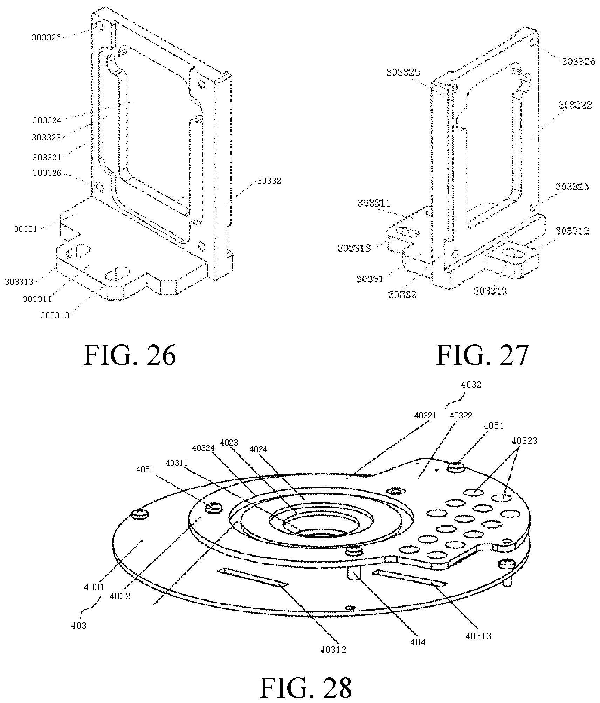

As shown in FIG. 26 and FIG. 27, the third side surface 303321 is provided with a second groove 303323, and the second groove 303323 is provided with a second through hole 303324. The second through hole 303324 penetrates through a bottom surface of the second groove 303323 and the fourth side surface 303322.

The second groove 303323 is configured to not only reduce a weight of the bracket, but also facilitate assembly of the receiving circuit board 3034, giving a sufficient assembling space for elements such as a chip of the circuit board.

The second through hole 303324 is configured to not only reduce the weight of the bracket, but also facilitate assembly of the substrate 30321, giving an assembling space for elements such as a chip of the substrate 30321.

As shown in FIG. 23, the receiving apparatus 303 further includes a third screw 3035, a second nut 3036, and a second washer 3037. The second washer 3037 is sleeved on the third screw 3035, and the third screw 3035 is mated with the second nut 3036.

With reference to FIG. 23, FIG. 26, and FIG. 27, second assembling holes 303326 are correspondingly provided on corners of the substrate 30321, the third side plate 30332, and the receiving circuit board 3034.

The third screw 3035 is sequentially threaded through the substrate 30321, the third side plate 30332, and the receiving circuit board 3034, and is mated with the second nut 3036.

As shown in FIG. 23, the receiving circuit board 3034 includes a first circuit board 30341, a second circuit board 30342, and a third circuit board 30343.

The first circuit board 30341 is separated from the second circuit board 30342 through the second washer 3037. The second circuit board 30342 is separated from the third circuit board 30343 through the second washer 3037. A spacing between the plurality of receiving circuit board 3034 may be adjusted through a thickness of the second washer 3037. The second washer 3037 is made of an insulator material.

As shown in FIG. 26 and FIG. 27, the third side plate 30332 is vertically connected to the fourth bottom plate 30331, and a distance between a projection of the fourth side surface 303322 on the fourth bottom plate 30331 and a plate edge of the fourth bottom plate 30331 away from the fourth side surface 303322 is equal to a thickness of the substrate 30321.

As shown in FIG. 27, the fourth side surface 303322 is further provided with a positioning plate 303325 in a height direction of the third side plate 30332 for quickly determining a mounting position for the substrate 30321.

As shown in FIG. 26, a protruding plate 303311 extends from an end of the fourth bottom plate 30331 away from the third side surface 303321. The protruding plate 303311 is provided with a plurality of third mounting holes 303313 for fixing the receiving circuit bracket 3033.

As shown in FIG. 27, an assembling lug 303312 further extends from the end of the fourth bottom plate 30331 away from the third side plate 30332. The assembling lug 303312 is provided with a third mounting hole 303313 for fixing the receiving circuit bracket 3033.

As shown in FIG. 23, the receiving apparatus 303 further includes a plurality of fourth screws 3038. The fourth screws 3038 is threaded through the third mounting holes 303313 to fix the receiving circuit bracket 3033 to the rotor of the lidar.

The receiving circuit bracket 3033 is an integrally formed structure. The receiving circuit bracket 3033 is made of any or a combination of copper, molybdenum, and aluminum.

As shown in FIG. 21, the second mirror set 302 includes a third mirror 3021 and a fourth mirror 3022. The third mirror 3021 is opposite to the fourth mirror 3022.

The light reflected from the target object converged by the receiving lens set 301 needs to meet requirements for a receiving field angle of the APD array detector.

Fourth bottom plates 30331 are all provided with chamfers. The chamfer is a straight chamfer, an arc chamfer, or a right-angle chamfer.

An avalanche photodiode (APD) array detector, that is, an avalanche photodiode detector, is integrated by a plurality of independent APD unit detectors, which has a compact structure, a small volume, and a light weight. The APD detector is an APD unit detector, which can implement scanning-free laser detection and three-dimensional imaging with a single pulse. The APD array detector can directly obtain three-dimensional information, and has a faster imaging speed and a simple system structure. The detection system performs multi-channel parallel processing on laser echo signals received by each unit of the array detector, thus implementing linear array imaging.

### Embodiment 7:

A difference between this embodiment and Embodiment 6 is that the APD array detector is a linear-array APD detector, which consists of n (such as 1, 4, 16, 32, or the like) avalanche photodiodes, where n ≥ 1, and converts an optical signal into an electrical signal through an avalanche effect of the photodiodes. Specifically, n depends on a way of laser emitter arrangement of the lidar.

### Embodiment 8:

A difference between this embodiment and Embodiment 6 is that
the receiving device includes a substrate and one APD detector, the substrate is fixed to the receiving circuit bracket, and the APD detector is disposed on a side surface of the substrate. The receiving device further includes a protective shell, where the protective shell is covered on the APD detector and is mounted to the substrate.

### Embodiment 9:

With reference to FIG. 28, FIG. 29, and FIG. 30, a wireless power transmission apparatus includes a wireless power emitting assembly and a wireless power receiving assembly. The wireless power emitting assembly is separated from and opposite to the wireless power receiving assembly. The wireless power emitting assembly includes a transmitting coil 406 and a transmitting circuit board 407. The transmitting coil 406 is connected to the transmitting circuit board 407.

The wireless power receiving assembly includes a receiving coil 401, a magnetic isolation board 402, and two receiving circuit boards 403. The receiving coil 401 is opposite to the transmitting coil 406. The magnetic isolation board 402 is disposed on a side of the receiving coil 401 away from the transmitting coil 406, and the magnetic isolation board 402 covers the receiving coil 401. The receiving coil 401 is connected to the receiving circuit boards 403.

The receiving circuit board 403 includes a fourth circuit board 4031 and a fifth circuit board 4032. The fourth circuit board 4031 is separated from and opposite to the fifth circuit board 4032. The fifth circuit board 4032 is connected to the magnetic isolation board 402, and the magnetic isolation board 402 is disposed on a side of the fifth circuit board 4032 facing the fourth circuit board 4031. A plurality of copper post tubes 404 are provided between the fourth circuit board 4031 and the fifth circuit board 4032 for adjusting a spacing between the fourth circuit board 4031 and the fifth circuit board 4032.

The wireless power transmission apparatus further includes a plurality of fifth screws 4051 and third nuts 4052 mated with the fifth screws 4051. The fourth circuit board 4031 is connected to the fifth circuit board 4032 through the fifth screws 4051 and the third nuts 4052. The fifth screws 4051 are in a one-to-one correspondence with the copper post tubes 404. The fifth screws 4051 is sequentially threaded through the fifth circuit board 4032, the copper post tubes 404, and the fourth circuit board 4031, and are mated with the third nuts 4052. The fourth circuit board 4031 is provided with a first assembling hole for the fifth screw 4051 to be threaded through. The copper post tube 404 is provided with a plug and socket portion mated with the first assembling hole, and the copper post tube 404 is fixed to the fourth circuit board 4031 through the insertion portion, which is convenient to assemble.

The fourth circuit board 4031 is a circular circuit board, and a fourth through hole 40311 is provided at a central position on the fourth circuit board 4031. The fourth through hole 40311 penetrates through two opposite side surfaces of the fourth circuit board 4031. The fourth through hole 40311 is a circular through hole. The fourth circuit board 4031 is further provided with a first perforation 40312 and a second perforation 40313. The fourth circuit board 4031 is connected to the transmitting circuit set of the lidar, and the fourth circuit board 4031 is connected to the receiving circuit set of the lidar.

The fourth circuit board 4031 is provided with a plurality of first mounting holes at intervals in a circumferential direction. The fourth circuit board 4031 is fixed to the rotor of the lidar by threading the screw through the first mounting hole.

The fifth circuit board 4032 is a special-shaped circuit board. The fifth circuit board 4032 includes a first connecting portion 40321 and a second connecting portion 40322. The first connecting portion 40321 is circular, the second connecting portion 40322 is fan-shaped, and the second connecting portion 40322 is attached to a part of an outer edge of the first connecting portion 40321.

An unfilled corner is further provided on a side of the outer edge of the second connecting portion 40322 to facilitate assembly. A shape of the magnetic isolation board 402 is similar to a shape of the fifth circuit board 4032, and outline dimensions of the magnetic isolation board 402 are less than outline dimensions of the fifth circuit board 4032.

The magnetic isolation board 402 includes a third connecting portion 4021 and a fourth connecting portion 4022. The third connecting portion 4021 is circular, the fourth connecting portion 4022 is fan-shaped, and the fourth connecting portion 4022 is attached to a part of an outer edge of the third connecting portion 4021. A thickness of the fourth connecting portion 4022 is less than a thickness of the third connecting portion 4021. The second connecting portion 40322 is provided with a plurality of glue injection holes 40323, and the magnetic isolation board 402 is glued to the fifth circuit board 4032.

An annular boss 24 is provided on a side of the magnetic isolation board 402 facing the fifth circuit board 4032, and the receiving coil 401 is attached to the annular boss 24.

The first connecting portion is provided with a fifth through hole 40324 opposite to the fourth through hole 40311, and a size of the fifth through hole 40324 is greater than that of the fourth through hole 40311.

The magnetic isolation board 402 is provided with a third through hole 4023 opposite to the fourth through hole 40311.

The fourth through hole 40311, the fifth through hole 40324, and the third through hole 4023 are coaxially disposed. An orthographic projection of the receiving coil 401 toward the magnetic isolation board 402 is located in the magnetic isolation board 402. The magnetic isolation board 402 is a ferrite magnet, an amorphous magnet, or a soft magnet for electromagnetically shielding the rotor of the lidar.

The transmitting coil 406 and the receiving coil 401 are respectively spirally arranged on the same plane. A fourth through hole is provided at a central position on the transmitting coil 406, and a fifth through hole is provided at a central position on the receiving coil 401. The fourth through hole and the fifth through hole are coaxially disposed.

An operating principle of the wireless power transmission apparatus is as follows

The wireless power transmission apparatus uses an electromagnetic induction principle, which means that a conductor placed in a changing magnetic flux generates an electromotive force. The electromotive force is referred to as an inductive electromotive force or an induced electromotive force. If the conductor is closed into a loop, the electromotive force drives electrons to flow to form an induced current. When a transmitting coil is powered on, an electromagnetic transmitting coil, which acts as an electromagnetic emitting end, generates a magnetic field. The generated magnetic field causes the receiving coil to generate a current to supply power to inside of the rotor.

### Second Aspect

A second aspect of the present invention relates to a laser emitter or a laser emitter module, which is described in detail below with reference to the accompanying drawings.

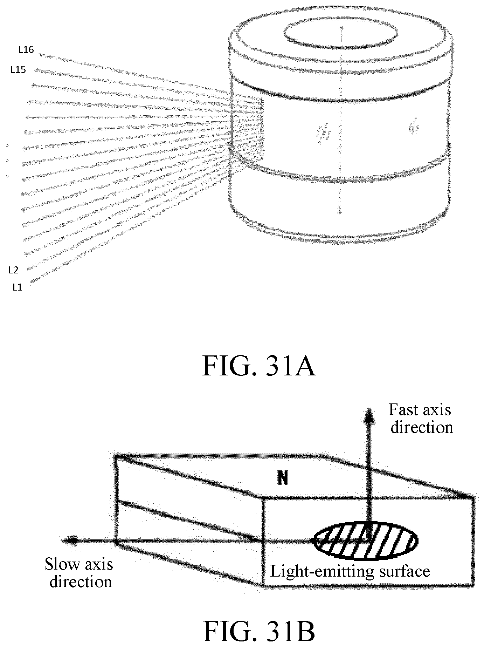

Lidar is a common name of active detection sensor devices though lasers. An operating principle of a lidar is substantially as follows. An emitter of the lidar emits a laser, and the laser beam returns to a laser receiver through diffuse reflection after encountering an object. A radar module can calculate a distance between the emitter and the object merely by multiplying a time interval between sending and receiving of signals and the speed of light and then dividing the product by 2. In terms of a number of laser beams, there are usually a single-beam lidar, a 4-beam lidar, an 8/16/32/64-beam lidar, and the like. One or more laser beams are emitted at different angles in a vertical direction and scanned in a horizontal direction, to implement detection of a three-dimensional profile of a target region. A plurality of measurement channels (laser beams) are equivalent to scanning planes at a plurality of angles. Therefore, more laser beams in a vertical field of view lead to a higher angular resolution in the vertical direction and a higher density of laser-point cloud. FIG. 31A schematically shows an example of a lidar. The lidar is a 16-beam lidar, that is, totally 16 laser beams: L1, L2, ..., L15, L16 may be emitted in a vertical plane in the figure for detecting surroundings. During detection, the lidar may rotate along a vertical axis thereof. During the rotation, channels of the lidar sequentially emit laser beams and detect the laser beams at a specified time interval (for example, 1 microsecond) to complete laser beam scanning once in a perpendicular field of view, and then perform next laser beam scanning in the perpendicular field of view at an interval of a specified angle (for example, 0.1 degrees or 0.2 degrees) in a horizontal field of view. In this way, the surroundings can be sensed merely by forming a point cloud through a plurality of times of detection during the rotation.

Most semiconductor laser emitter chips currently applied to a mechanical lidar are edge-emitting. A light-emitting surface of the edge-emitting laser emitter has a fast axis direction and a slow axis direction, which is schematically shown in FIG. 31B. A size of the edge-emitting laser emitter in the slow axis direction is relatively large, for example, on the order of 100 µm, and a size in the fast axis direction is relatively small, for example, on the order of 10 µm. In addition, FIG. 31B also schematically shows a negative electrode N of the laser emitter chip. A positive electrode P is located on a lower surface opposite to the negative electrode N, for example.

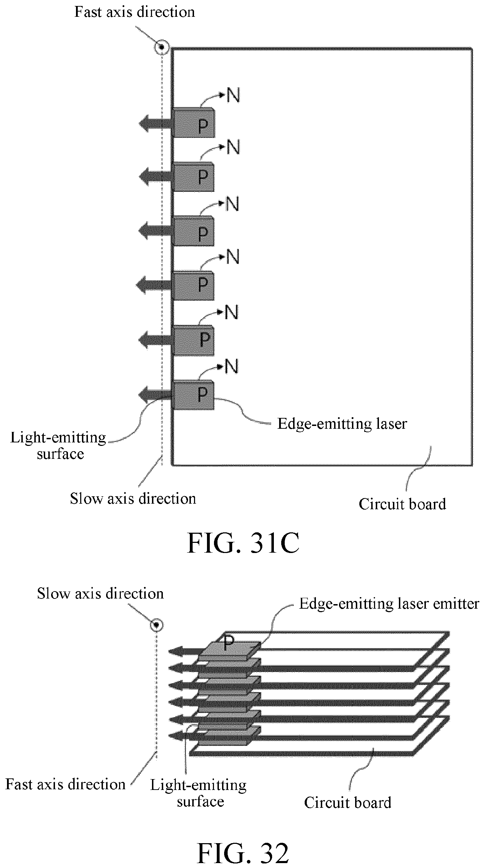

FIG. 31C schematically shows a schematic diagram of mounting of a laser emitter chip in a mechanical lidar not encompassed by the wording of the claims. With reference to FIG. 31A, FIG. 31B, and FIG. 31C, a circuit board in FIG. 31C is disposed in the lidar in a vertical direction in FIG. 31A, and a plurality of edge-emitting laser emitter chips shown in FIG. 31B are disposed thereon in a vertical direction (the vertical direction in FIG. 31A) of a focal plane of an optical exit system of the lidar. The laser emitter chips emit laser beams from the light-emitting surface, and the laser beams aim at the exit optical system. Since the slow axis direction of the light-emitting surface is parallel to the electrode, and the electrode of the laser emitter chip is directly attached to the circuit board during conventional application, the slow axis direction of the light-emitting surface is parallel to the circuit board (which is shown in FIG. 31C). In FIG. 31C, a plurality of edge-emitting laser emitter chips are disposed in a vertical direction of a lidar. Therefore, the slow axis direction (a vertical dashed line in FIG. 31C) of the light-emitting surface of the laser emitter chips in FIG. 31C is the vertical direction in FIG. 31A, and the fast axis direction of the light-emitting surface is perpendicular to a direction of a paper surface. For the lidar, if a limit of an angular resolution in the vertical direction needs to be increased, a size of the light-emitting surface in the vertical direction needs to be minimized. In the structure shown in FIG. 31C, the plurality of laser emitter chips need to be disposed in the vertical direction of the lidar, and the slow axis direction of the laser emitter chips needs to be in the vertical direction in the figure. However, the slow axis size of the edge-emitting laser emitter is relatively large (on the order of 100 µm). Therefore, the laser emitter chips cannot be arranged more densely within a limited vertical dimension range of the focal plane, impeding an increase in the limit of the angular resolution in the vertical direction. Based on the above situation, the prior art provides a solution of horizontally placing the circuit board, which is shown in FIG. 32.

In the technical solution of FIG. 32, a circuit board is placed horizontally, and a laser emitter chip is directly attached to the circuit board. The technical solution has the following disadvantages.

First, a laser emitter with a different vertical height (located at a focal plane of an emitting lens) is required for each different vertical angle of the lidar. In this case, a corresponding number of circuit boards need to be horizontally placed (for example, a 64-beam lidar requires 64 circuit boards) and staggered in a vertical direction. Therefore, within a specified size, a limit of an angular resolution of the lidar in a vertical direction is greatly restricted by a thickness of the circuit board, a height of a component on the circuit board, and the like.

Secondly, in order to ensure consistency of vertical angles of the lidar, a position of a circuit board carrying each laser emitter needs to be accurately fixed, which is cumbersome and complicated.

Therefore, laser emitters and lidars that can increase the angular resolution in the vertical direction are continuously required in the prior art.

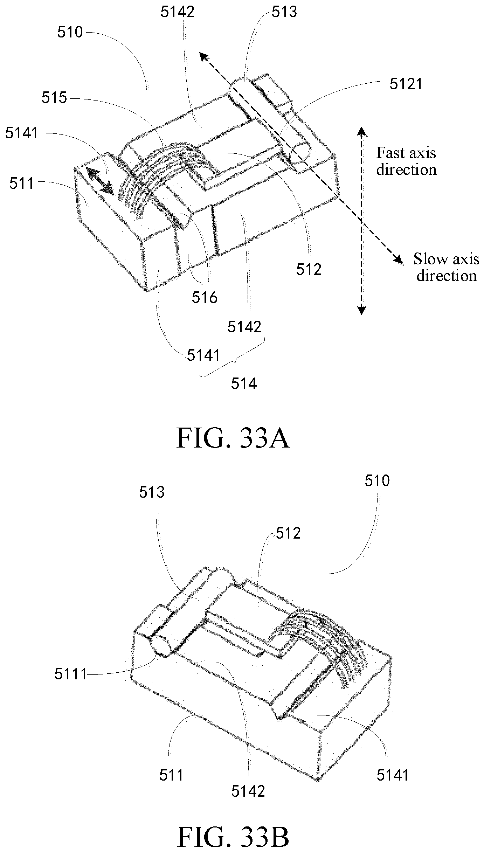

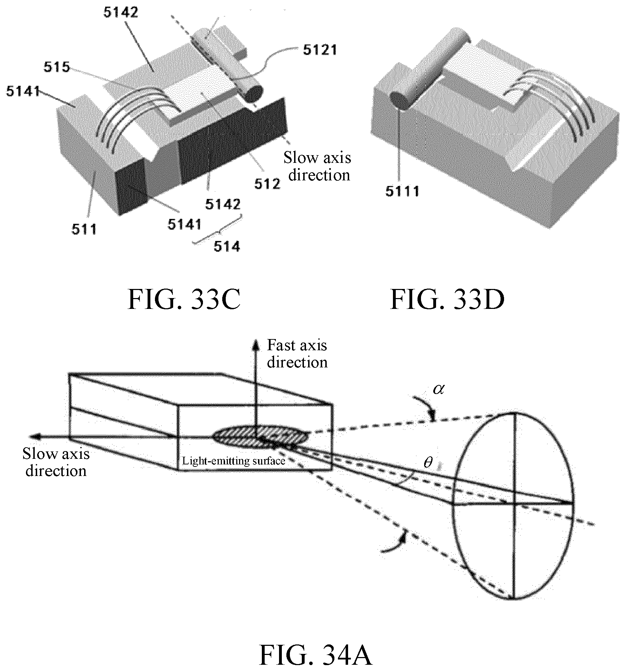

A second aspect of the present invention relates to a laser emitter 510, which is shown in FIG. 33A, FIG. 33B, FIG. 33C, and FIG. 33D. Detailed description is given below with reference to FIG. 33A and FIG. 33B. FIG. 33A is a three-dimensional diagram of a laser emitter 510 viewed from a front side, FIG. 33B is a three-dimensional diagram of the laser emitter 510 viewed from a rear side, and FIG. 33C and FIG. 33D are respectively renderings of FIG. 33A and FIG. 33B, to show a specific structure of the laser emitter more clearly.

As shown in FIG. 33A and FIG. 33B, the laser emitter 510 includes a base 511, a laser emitter chip 512, and a laser beam shaping element 513. The laser emitter chip 512 is disposed on the base 511, and the laser emitter chip 512 has a light-emitting surface 5121. After driving of a voltage, a laser beam is emitted from the light-emitting surface 5121. The laser beam shaping element 513 is opposite to the light-emitting surface 5121. In order to accurately position the laser beam shaping element 513 on the base, a positioning portion 5111 is formed on the base 511 for positioning the laser beam shaping element 513. FIG. 33B and FIG. 33D show the positioning portion 5111 more clearly.

The operating principle and method of the laser emitter 510 are as follows. The base 511 provides support and positioning for other optoelectronic components of the laser emitter 510. After being driven by the voltage, the laser emitter chip 512 emits a laser beam from the light-emitting surface 5121 thereof. Since the light-emitting surface 5121 is opposite to the laser beam shaping element 513, the emitted laser beam is optically shaped and modulated by the laser beam shaping element 513 to change some optical parameters and properties of the emitted laser beam, and then continues to be emitted. Those skilled in the art can understand that an appropriate laser beam shaping element 513 and functions to be implemented by the laser beam shaping element may be selected according to actual requirements. For example, the laser beam shaping element 513 may compress, in some direction, the laser beam emitted from the light-emitting surface 5121 to reduce an angle of divergence in the direction. Alternatively, the laser beam shaping element 513 may adjust a diameter of the laser beam emitted from the light-emitting surface 5121. The laser beam shaping element 513 may include one or more of an optical fiber, a cylindrical lens, a D lens, or an aspherical lens. The present invention is not limited to the specific type of the laser beam shaping element 513 and the shaping and the modulation implemented by the laser beam shaping element. All fall within the scope of the present disclosure. Preferably, the positioning portion 5111 is disposed in such a way that a center of the laser beam shaping element 513 is at the same height as a center of the light-emitting surface 5121 of the laser emitter chip 512, facilitating adjustment to optical parameters of the laser beam through the laser beam shaping element 513.

According to a preferred embodiment of the present invention, the laser emitter chip 512 is an edge-emitting laser emitter chip, such as an edge-emitting distributed Bragg reflector (DBR) laser emitter chip, an edge-emitting distributed feedback (DFB) laser emitter chip, or the like. The light-emitting surface of the edge-emitting laser emitter has a slow axis direction and a fast axis direction. FIG. 33A schematically shows a fast axis direction and a slow axis direction of a light-emitting surface of a laser emitter chip 512. A size of the light-emitting surface of the edge-emitting laser emitter in the slow axis direction is usually relatively large, and a size in the fast axis direction (that is, a size in a thickness direction of the laser emitter chip 512 in the figure) is usually relatively small. Angles of divergence of laser beams emitted by the edge-emitting laser emitters in the fast axis direction and the slow axis direction are usually different. Generally, the angle of divergence in the slow axis direction is relatively small, and the angle of divergence in the fast axis direction is relatively large. FIG. 34A shows an angle of divergence *θ* of a laser beam emitted by a laser emitter chip in a slow axis direction and an angle of divergence *α* in a fast axis direction. It may be clearly seen that the angle of divergence *α* in the fast axis direction is significantly larger than the angle of divergence *θ* in the slow axis direction. Those skilled in the art may easily understand that the angle of divergences *α* and *θ* shown in FIG. 34A are merely illustrative and do not mean that an actual angle of divergence of the laser emitter chip is so large. According to an embodiment, the angle of divergence *θ* in the slow axis direction is, for example, about ten degrees, and the angle of divergence *α* in the fast axis direction is, for example, about 30 degrees.

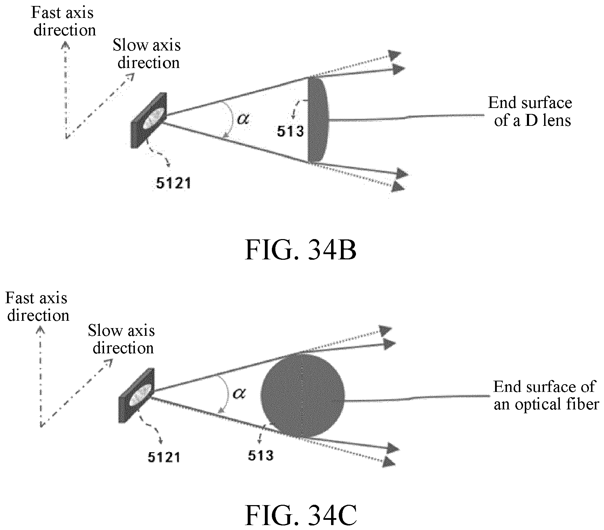

The laser emitter chip 512 is attached to the base 511, for example, and is disposed in such a way that the light-emitting surface 5121 is perpendicular to a surface to which the laser emitter chip is attached and parallel to a direction in which the positioning portion 5111 extends, which is shown in FIG. 33A and FIG. 33B. The laser emitter chip 512 and the laser beam shaping element 513 are disposed on the base 511 in such a way that the slow axis direction of the light-emitting surface 5121 is parallel to a direction in which the laser beam shaping element 513 extends, thereby reducing a height of the light-emitting surface of the laser emitter 510, that is, reducing the size of the light-emitting surface in the vertical direction in FIG. 33. The laser beam shaping element 513 is, for example, a fast axis compression element, which can compress the angle of divergence of the laser emitted from the light-emitting surface 5121, in the fast axis direction, so that after the emitted laser beam passes through the laser beam shaping element 513, the angle of divergence in the fast axis direction is smaller, and a convergence degree is higher. FIG. 34B and FIG. 34C show a situation in which an angle of divergence *α* of a laser beam emitted by a light-emitting surface 5121 of a laser emitter chip 512 in a fast axis direction decreases after the laser beam passes through a laser beam shaping element 513. FIG. 34B shows a situation in which a D lens serves as the laser beam shaping element 513, and FIG. 34C shows a situation in which an optical fiber serves as the laser beam shaping element 513. A dashed line shows an uncompressed light path, and a solid line corresponding to the dashed line is a light path compressed by the fast axis. As shown in the figure, after the laser beam passes through the D lens or the optical fiber, the angle of divergence *α* of the laser beam in the fast axis direction is significantly reduced.

In addition, the laser emitter chip and the laser beam shaping element 513 shown in FIG. 34B and FIG. 34C are spaced apart from each other by a specified distance, which is merely for illustrative purposes and does not limit the protection scope of the present invention. The laser emitter chip and the laser beam shaping element may also be closely adjacent. According to an embodiment of the present invention, after the laser beam passes through the laser beam shaping element 513, the angle of divergence *α* of the laser beam in the fast axis direction is compressed to be equivalent to the angle of divergence *θ* in the slow axis direction, for example, reduced from 30 degrees to, for example, ten degrees.

According to a preferred embodiment of the present invention, the laser beam shaping element 513 may include one or more of an optical fiber, a cylindrical lens, a D lens, or an aspherical lens. The shaping and the modulation of the laser beam emitted from the light-emitting surface 5121 can be implemented through all of the various examples of the laser beam shaping element 513 listed above. For example, the angle of divergence of the laser beam in the fast axis direction is most frequently compressed through a cylindrical lens.

According to a preferred embodiment of the present invention, the positioning portion 5111 includes one or more of a V-shaped groove, a U-shaped groove, and a step for accurately positioning the laser beam shaping element 513. The positioning portion 5111 is, for example, a microstructure located near an end of the base. For example, a microstructure such as a V-shaped groove or grooves of other shapes or a step on the order of µm may be processed at a front end on a silicon base through an etching process. The microstructure is used for accurate positioning of the laser beam shaping element 513. In the case of the V-shaped groove, the laser beam shaping element 513 may be directly embedded in the V-shaped groove for positioning. In the case of the step, the laser beam shaping element 513 may be positioned close to the step. Those skilled in the art easily understand that, after being accurately positioned, the laser beam shaping element 513 may be fixed in place through other additional means, for example, fixed to the base 511 through an adhesive.

FIG. 33A and FIG. 33B show that a positioning portion 5111 includes a V-shaped groove, which is, for example, at a position close to an end of a base 511. The laser beam shaping element 513 is an optical fiber clamped in the V-shaped groove. FIG. 33A and FIG. 33B show that the positioning portion 5111 further includes a step. The combination of the V-shaped groove and the step facilitates accurate positioning of the laser beam shaping element 513 relative to the light-emitting surface 5121 of the laser emitter chip 512, and facilitates accurate modulation and shaping of the laser beam emitted from the light-emitting surface 5121. Those skilled in the art understand that either the V-shaped groove or the step can serve as a positioning portion alone to implement the accurate positioning of the laser emitter chip 5121 relative to the laser beam shaping element. All fall within the protection scope of the present invention.

It is to be noted that the positioning portion stated in the present invention refers to a part or an element that facilitates the positioning of the laser beam shaping element, which does not indicate that the laser beam shaping element can be positioned through the positioning portion alone without other components. This is easily understood for those skilled in the art. For example, in the embodiments of FIG. 33A and FIG. 33B, in addition to the positioning portion 5111, an adhesive or the like may also be used to enhance the positioning effect. Details are not described herein again.

The semiconductor laser emitter structure with a structure accurately positioned shown in FIG. 33A, FIG. 33B, FIG. 33C, and FIG. 33D can conveniently modulate the beam of the laser emitter chip and is convenient to mount.

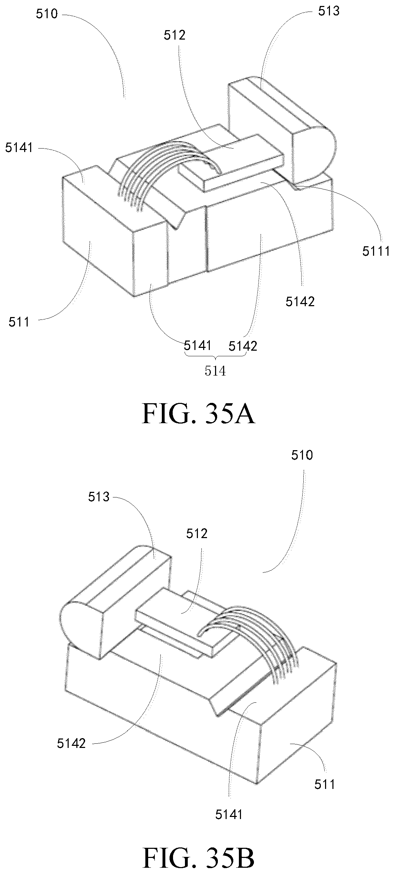

FIG. 35A and FIG. 35B show a laser emitter 510 according to another embodiment of the present invention, in which a positioning portion 5111 includes a step, and a laser beam shaping element 513 is a D lens positioned against the step. A laser beam emitted from a light-emitting surface 5121 of a laser emitter chip 512 enters one side of a plane of the D lens, and is emitted at a smaller angle of divergence in a fast axis direction from the other side. Positioning portions and laser beam shaping elements of other shapes and types of may also be conceived by those skilled in the art under the teaching and the enlightenment of the present invention. All fall within the protection scope of the present invention.

According to a preferred embodiment of the present invention, the base is made of silicon (preferably, high-resistance silicon) or other materials for which a processing depth can be precisely controlled through an etching process or a chemical corrosion process. The positioning portion 5111 is formed on the silicon base through an etching process or a chemical corrosion process. Compared with ceramic materials, silicon is easier to etch and facilitates accurate control of a position and a size of the positioning portion, so that the laser beam shaping element 513 can be accurately positioned through the positioning portion 5111 to shape and modulate the laser beam emitted from the light-emitting surface of the laser emitter chip, thus reducing the angle of divergence in the fast axis.

According to a preferred embodiment of the present invention, the laser emitter 510 further includes an electrode 514 disposed on the base. The electrode is configured to supply power to the laser emitter chip. Detailed description is given below with reference to the accompanying drawings.

FIG. 33A and FIG. 33B show an electrode 514 according to a preferred embodiment of the present invention. As shown in FIG. 33A, the electrode 514 includes a positive electrode 5141 and a negative electrode 5142. The positive electrode 5141 and the negative electrode 5142 are, for example, metal plates or thin metal layers (such as gold foil), and are attached to a surface of the base 511 through electroplating, for example. As shown in FIG. 33A, the positive electrode 5141 is separated from the negative electrode 5142 by a partition 516. The partition 516 is, for example, an integral part of the base 511 without a metal plate or a thin metal layer thereon, thereby separating the positive electrode 5141 from the negative electrode 5142 (which is shown more clearly in FIG. 33C and FIG. 33D). Alternatively, the partition 516 may also be an independent non-conductive layer, for example, a silicon dioxide layer. Both the positive electrode 5141 and the negative electrode 5142 may be disposed on the same surface of the base as the laser emitter chip and on a side surface of the base perpendicular to the light-emitting surface. For example, both the positive electrode 5141 and the negative electrode 5142 extend through two surfaces of the base 511, that is, a top surface in FIG. 33A and a side surface close to an observer, to facilitate mounting. A part of the electrode soldered to the circuit board is located on the side surface of the base. In FIG. 33A, directions (which are shown by the double-headed arrow on an upper portion of the positive electrode 5141 in FIG. 33A) in which upper portions (parts located on the same surface as the laser emitter chip on the base) of the positive electrode 5141 and the negative electrode 5142 extend are substantially parallel to the light-emitting surface 5121 of the laser emitter chip 512 and parallel to the direction in which the laser beam shaping element 513 extends. A lower surface of the laser emitter chip 512 is attached to the negative electrode 5142, and has the same potential as the negative electrode 5142. An upper surface of the laser emitter chip 512 is coupled to the positive electrode 5141 through a wire (such as a gold wire) 515, and has the same potential as the positive electrode 5141. The positive electrode 5141 is separated from the negative electrode 5142 by a base without an electrode material (for example, which is shown by the V groove penetrating through the upper surface of the base on a left side in FIG. 33A). When the laser emitter 510 is powered on, there is a voltage difference between the positive electrode 5141 and the negative electrode 5142, thereby driving the laser emitter chip 512 to emit a laser beam from the light-emitting surface thereof. In addition, polarities of the positive electrode 5141 and the negative electrode 5142 may be transposed, which also falls within the protection scope of the present disclosure. The arrangement of the electrodes in FIG. 35A and FIG. 35B is similar to that in FIG. 33A and FIG. 33B, and details are not described herein again.

Various components of the laser emitter 510 shown in FIG. 33A, FIG. 33B, FIG. 35A, and FIG. 35B are disposed very compactly, and may be densely arranged especially when used at a transmitting end of the lidar. A limit of a spacing between the laser emitters 510 may be a thickness (that is, a size in the fast axis direction) of the laser emitter chip, which greatly increases the limit of the angular resolution of the lidar in the vertical direction.

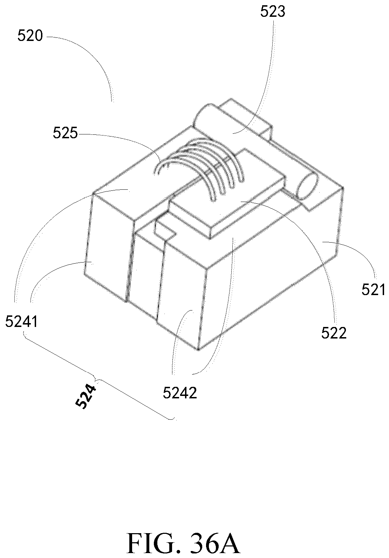

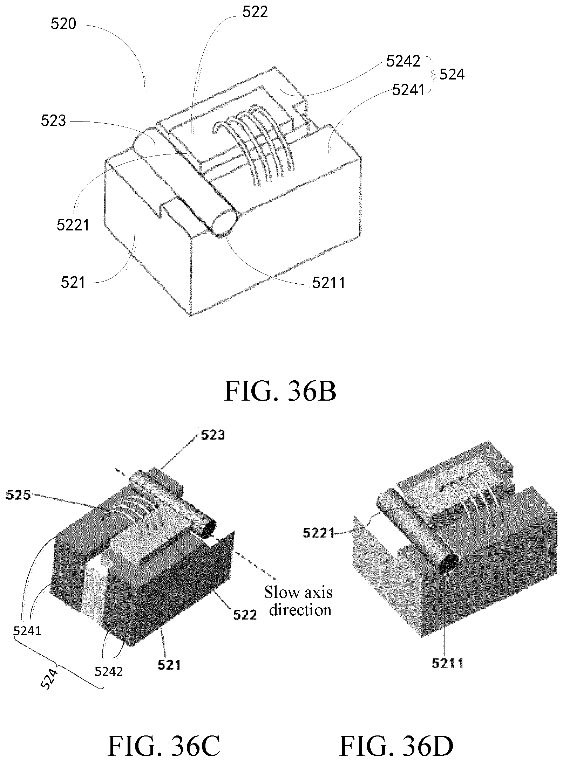

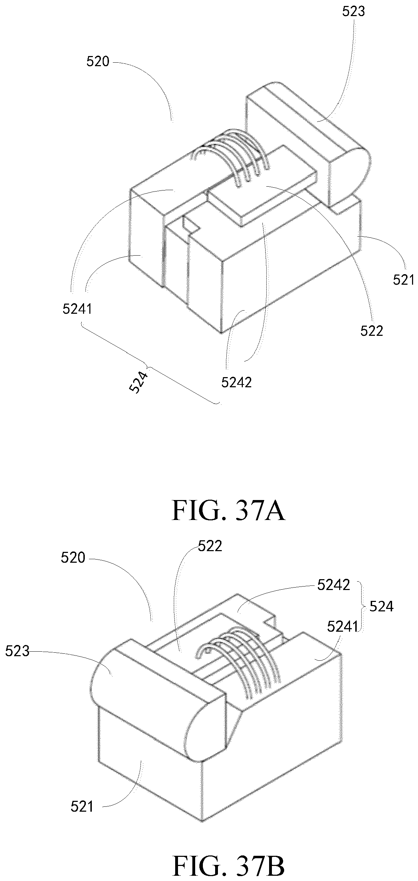

FIG. 36A and FIG. 36B show a laser emitter 520 according to another embodiment of the present invention, and FIG. 36C and FIG. 36D are renderings of FIG. 36A and FIG. 36B, which show a structure of the laser emitter more clearly. The laser emitter 520 includes a base 521, a laser emitter chip 522, and a laser beam shaping element 523. The base 521 has a positioning portion 5211 for assisting the accurate positioning of the laser beam shaping element 523, which are similar to those shown in FIG. 33A and FIG. 33B, and details are not described herein again. The laser emitter 520 further has an electrode 524 including a positive electrode 5241 and a negative electrode 5242. The laser emitter chip 522 is attached to the negative electrode 5242, and an upper surface of the laser emitter chip 522 is connected to the positive electrode 5241 through a wire (such as a gold wire) 525. As shown in FIG. 36A and FIG. 36B, the positive electrode 5241 is separated from the negative electrode 5242 by a partition. Both the positive electrode and the negative electrode are disposed on the same surface of the base as the laser emitter chip and on an end surface of the base parallel to the light-emitting surface. For example, the positive electrode 5241 and the negative electrode 5242 also extend through two surfaces of the base 521, that is, a top surface and one of end surfaces in FIG. 36A. As shown in FIG. 36A and FIG. 36B, directions in which upper portions (parts located on the same surface as the laser emitter chip on the base) of the positive electrode 5241 and the negative electrode 5242 extend are perpendicular to the light-emitting surface 5221 of the laser emitter chip 522 and perpendicular to the direction in which the laser beam shaping element 523 extends. A part of the electrode soldered to the circuit board is located on the end surface of the base. The positive electrode 5241 is separated from the negative electrode 5242 by a base without an electrode material. In FIG. 37A and FIG. 37B, the arrangement of the electrode 524 is similar to that in FIG. 36A and FIG. 36B, except that a D lens and a step positioning portion are adopted. Details are not described herein again.

The laser emitter in the above embodiments of the present invention can further increase the limit of the angular resolution of a mechanical lidar in the vertical direction when applied to the lidar. The advantage will be obvious and easily understood through the following description.

### Third aspect

A third aspect of the present invention relates to a laser emitter emitting board assembly. The laser emitter emitting board assembly includes a circuit board and the plurality of laser emitters described above. The laser emitters are disposed on the circuit board, and light-emitting surfaces of laser emitter chips of the laser emitters are oriented in the same direction, thus emitting laser beams in the same direction.

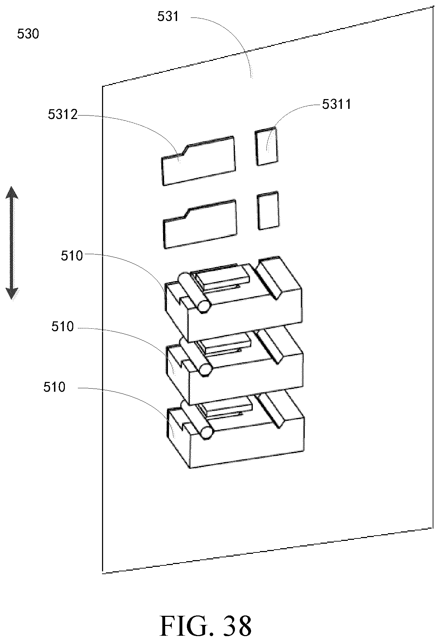

FIG. 38 shows a laser emitter emitting board assembly 530 according to a preferred embodiment of the present invention. The laser emitter emitting board assembly includes a circuit board 531 and a plurality of laser emitters disposed on the circuit board, such as the laser emitter 510 shown in FIG. 33A, FIG. 33B, FIG. 35A, and FIG. 35B, and electrodes 5141 and 5142 thereon are soldered to pads 5311 and 5312 of the circuit board 531. As shown in FIG. 38, a slow axis direction of light-emitting surfaces of the plurality of laser emitters 510 is perpendicular to the circuit board 531. During operation, the circuit board 531 provides a driving voltage for a laser emitter chip 512 in the laser emitter 510 through the pads 5311 and 5312 thereon. The laser emitter chip 512 emits a laser beam from the light-emitting surface 5121 thereof. After being shaped by a laser beam shaping element, the laser beam continues to propagate at a reduced angle of divergence in the fast axis direction.

It is to be noted that, FIG. 38 adaptively shows that the laser emitter 510 has an optical fiber serving as the laser beam shaping element, but it is easily understood that the laser emitter may further have laser beam shaping elements of other types such as cylindrical lenses, D lenses, or aspherical lenses. The double-headed arrow in FIG. 38 shows the vertical direction of the lidar of FIG. 31A. Compared with the configuration of the laser emitter chip in FIG. 31C, in the technical solution of FIG. 38, the light-emitting surface of the laser emitter chip is turned by 90 degrees, and a fast axis direction (with a relatively small size) of the laser emitter chip overlaps the vertical direction of the lidar, so that more laser emitter chips can be arranged in the vertical direction of the lidar, thus improving the angular resolution of the lidar in the vertical direction.

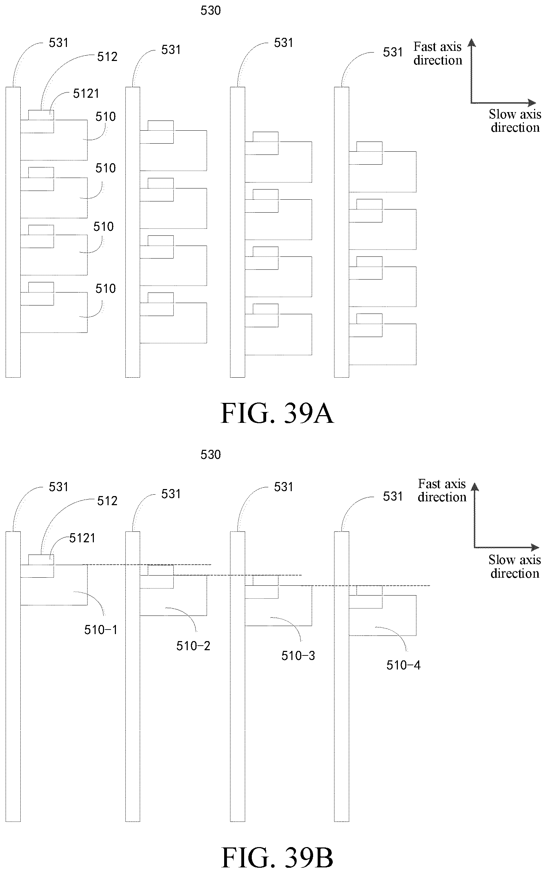

In addition, more preferably, as shown in FIG. 39, the laser emitter emitting board assembly 530 includes a plurality of circuit boards 531, and a plurality of laser emitters 510 are disposed on each of the circuit boards. Light-emitting surfaces 5121 of laser emitter chips 512 in the laser emitters 510 on the plurality of circuit boards 531 are staggered with respect to each other in the fast axis direction. For example, in FIG. 39, four circuit boards 531 are disposed in a slow axis direction, and four laser emitters 510 are disposed on each of the circuit boards, which add up to 16 laser emitters 510. Positions of the 16 laser emitters 510 are staggered with respect to each other and do not overlap in the fast axis direction in FIG. 39 (that is, corresponding to the vertical direction of the lidar in FIG. 38). In other words, when arranged in the lidar, the 16 laser emitters 510 are respectively located at different vertical heights of a focal plane of an optical exit system of the lidar, so that laser beams can be emitted at different positions for detecting surroundings.

FIG. 39A includes a plurality of circuit boards in FIG. 38 and laser emitters thereon, and is a view from a left side of FIG. 38. The gold wire and the laser beam shaping element are omitted for clarity. As shown in FIG. 39, the plurality of circuit boards 531 are stacked in the slow axis direction of the light-emitting surface. By means of such a configuration and the laser emitter module described above, the limit of the angular resolution of the lidar in the vertical direction can be greatly increased. For example, in FIG. 39A, although the laser emitter chips of the laser emitter 510 on a single circuit board 531 need to be spaced apart by a specific distance in the vertical direction (the fast axis direction) in the figure (a stacking limit is that a bottom surface of an upper laser emitter is in contact with a top surface of a lower laser emitter) as a result of being restricted by a thickness of the base, but the laser emitters on different circuit boards 531 are not necessarily restricted by the thickness of the base and only need to be staggered with respect to each other in the fast axis direction. In an extreme case, the laser emitter chips of the laser emitters on the plurality of circuit boards are consecutive in the fast axis direction. For example, FIG. 39B schematically shows four circuit boards 531 respectively having a laser emitter 510-1, a laser emitter 510-2, a laser emitter 510-3, and a laser emitter 510-4. A lower surface of a laser emitter chip of the laser emitter 510-1 and an upper surface of a laser emitter chip of the laser emitter 510-2 overlap, a lower surface of the laser emitter chip of the laser emitter 510-2 and an upper surface of a laser emitter chip of the laser emitter 510-3 overlap, and a lower surface of the laser emitter chip of the laser emitter 510-3 and an upper surface of a laser emitter chip of the laser emitter 510-4 overlap, which is shown by the dashed lines in FIG. 39B. In this way, as many laser emitters as possible can be arranged in the vertical direction of the lidar. Those skilled in the art can easily understand that a plurality of laser emitters may be disposed on each of the circuit boards 531. Therefore, compared with the arrangement in FIG. 31 and FIG. 32, such an arrangement of the present invention can greatly increase the limit of the angle resolution of the lidar in the vertical direction.

The soldering method for the electrodes and the pad shown in FIG. 39 is applicable to the semiconductor laser emitters shown in FIG. 33A, FIG. 33B, FIG. 35A, and FIG. 35B. Through the arrangement of the plurality of circuit PCB boards, the plurality of semiconductor laser emitters are at different heights of the focal plane of the emitting lens, thus implementing the high angular resolution in the direction of the vertical field of view. The base does not affect a final thickness, which only requires the laser emitters to be staggered in the fast axis direction.

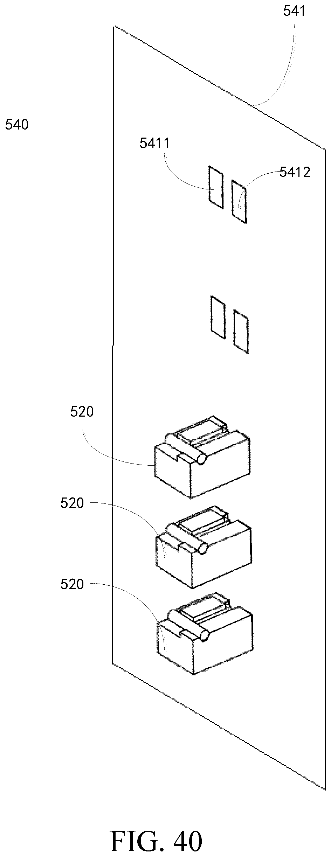

FIG. 40 shows a laser emitter emitting board assembly 540 not encompassed by the wording of the claims. The laser emitter emitting board assembly includes a circuit board 541 and a plurality of laser emitters, such as the laser emitters 520 shown in FIG. 36A, FIG. 36B, FIG. 37A, and FIG. 37B. The laser emitters 520 are soldered on pads 5411 and 5412 of the circuit board 541 for obtaining driving voltages through the pads 5411 and 5412, and a slow axis direction of light-emitting surfaces of laser emitter chips 522 of the plurality of laser emitters 520 is parallel to the circuit board.

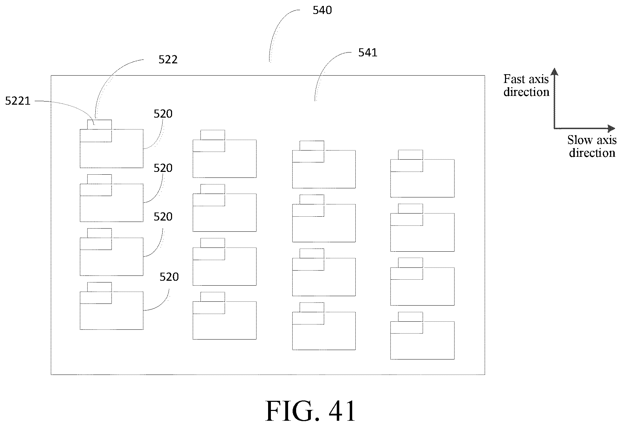

FIG. 41 shows a laser emitter emitting board assembly 540 not encompassed by the wording of the claims. A main difference between FIG. 41 and FIG. 40 is that FIG. 41 includes a plurality of columns of laser emitters. It is easily understood that FIG. 41 is a view from a left side of FIG. 40. The light-emitting surfaces of the laser emitter chips in the plurality of laser emitters on the circuit board are staggered with respect to each other in a fast axis direction. As shown in FIG. 41, light-emitting surfaces of laser emitter chips in the plurality of columns of laser emitters are staggered with respect to each other in the fast axis direction. Therefore, through such an arrangement mode, the arrangement density in the fast axis direction is implemented as the size of the laser emitter chip in the fast axis direction, which greatly increases the limit of the angular resolution of the lidar in the vertical direction.

The soldering method for the electrodes and the pad in the embodiment shown in FIG. 41 is applicable to the semiconductor laser emitters shown in FIG. 36A, FIG. 36B, FIG. 37A, and FIG. 37B. Through the arrangement of the plurality of semiconductor laser emitters on the single circuit PCB board, the plurality of semiconductor laser emitters are at different heights of the focal plane of the emitting lens, thus implementing the high angular resolution in the direction of the vertical field of view.

### Fourth aspect

A fourth aspect of the present invention further relates to a lidar. The lidar includes the laser emitter emitting board assembly 530 or 540 described above. The third aspect of the present invention can further increase an optical limit of the angular resolution of the lidar in the vertical direction and improve ranging performance.

According to a preferred embodiment of the present invention, the lidar may further include an emitting lens located downstream of the laser emitter emitting board assembly for further modulating a laser beam emitted by the laser emitter emitting board assembly, for example, changing convergence and/or a direction thereof.

### Fifth aspect

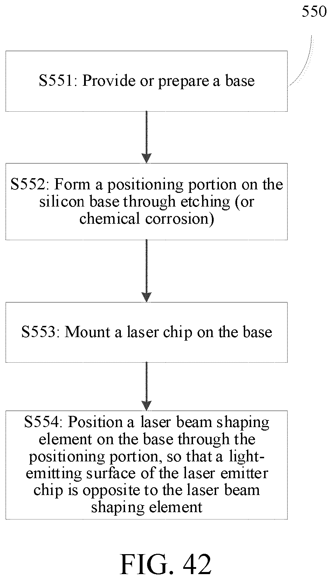

FIG. 42 shows a method 550 for encapsulating a laser emitter according to a fifth aspect of the present invention. The method 550 includes the following steps.

In step S551, a base is provided or prepared. The base may be usually made of a material for which a processing depth can be precisely controlled through an etching process or a chemical corrosion process, for example, silicon (preferably, high-resistance silicon).

In step S552, a positioning portion is formed on the base through etching or chemical corrosion. The positioning portion is, for example, in a form of a V-shaped groove, a U-shaped groove, a step, or a combination thereof.

In step S553, a laser emitter chip is mounted on the silicon base. During the mounting, the laser emitter chip may need to be coupled to an electrode of the base, to provide a driving voltage for the laser emitter chip.

In step S554, a laser beam shaping element is positioned on the base through the positioning portion, so that a light-emitting surface of the laser emitter chip is opposite to the laser beam shaping element. For example, an accurate positioning position of the laser beam shaping element is found through the positioning portion. The positioning portion may be configured to directly fix the laser beam shaping element in place. Alternatively, in addition, after positioning, the laser beam shaping element is positioned on the positioning portion through adhesion or the like.

Preferably, the encapsulating method 550 further includes: causing a center of the laser beam shaping element 513 to be at the same height as a center of the light-emitting surface 5121 of the laser emitter chip 512.

According to a preferred embodiment of the present disclosure, the laser emitter chip is of an edge-emitting type, and the light-emitting surface thereof has a slow axis direction and a fast axis direction. The slow axis direction is parallel to a direction in which the laser beam shaping element extends, and the laser beam shaping element is a fast axis compression element and configured to compress an angle of divergence of a laser emitted from the light-emitting surface in the fast axis direction.

A limit (only restricted by a fast axis size) of an angular resolution of a laser emitter emitting board assembly of the present invention in a vertical direction can be greatly increased. The method can be used to perform accurate fast axis compression while implementing 90° turning of the light-emitting surface of the chip. Materials such as silicon for which a processing depth and a processing size can be accurately controlled through an etching process are used to prepare a base with an accurate pattern size, which can effectively control a fast axis compressed angle of divergence and beam directivity, thus improving ranging performance. In addition, the light-emitting surface of the chip is turned by 90°, which facilitates more reduction of measurement errors in ground lane lines, pedestrian lines, and distant ground.

Those skilled in the art can easily understand that the lidar in the first aspect described above may be randomly combined with the technical solutions disclosed in the second aspect, the third aspect, the fourth aspect, and the fifth aspect described above.

For example, as shown in FIG. 14, in the lidar according to the embodiment of the first aspect of the present invention, at least one laser emitter 2015 is disposed on the laser emitter emitting board 2014. The laser emitter 2015 may be, for example, the laser emitter 510 and/or the laser emitter 520 shown in FIG. 33A to FIG. 33D, FIG. 35A, FIG. 35B, FIG. 36A to FIG. 36D, FIG. 37A, and FIG. 37D.

In addition, the laser emitter emitting board 2014 includes, for example, the laser emitter emitting board assembly 530 (which is shown in FIG. 38) involved in the third aspect of the present invention. The laser emitter emitting board assembly 530 includes a circuit board 531 and a plurality of laser emitters 510 disposed on the circuit board. With reference to FIG. 14, FIG. 38, and FIG. 39, a laser emitter bracket 2011 has a comb structure with a plurality of vertical slots. Laser emitter emitting boards (corresponding to the laser emitter emitting board assembly 530 or including the laser emitter emitting board assembly 530) are respectively disposed in a plurality of slots 201122. Light-emitting surfaces of laser emitter chips of the laser emitter emitting boards in the plurality of slots are staggered with respect to each other in a fast axis direction. A plurality of laser emitter emitting boards 2014 are disposed in the slots 201122 of the comb structure, and the laser emitter emitting board assembly 530 shown in FIG. 38 is disposed on each of the laser emitter emitting boards 2014. Each laser emitter emitting board assembly 530 includes a plurality of laser emitters 510 arranged in a vertical direction, and light-emitting surfaces 5121 of laser emitter chips 512 on the laser emitters 510 on a plurality of circuit boards 531 are staggered with respect to each other in the fast axis direction, to form a light-emitting structure shown in FIG. 39. As shown in FIG. 39, the plurality of circuit boards 531 are stacked in a slow axis direction of the light-emitting surface. By means of such a configuration and the laser emitter described above, the limit of the angular resolution of the lidar in the vertical direction can be greatly increased. For example, in FIG. 39, although the laser emitter chips of the laser emitter 510 on a single circuit board 531 need to be spaced apart by a specific distance in the vertical direction (the fast axis direction) in the figure (a stacking limit is that a bottom surface of an upper laser emitter is in contact with a top surface of a lower laser emitter) as a result of being restricted by a thickness of the base, but the laser emitters on different circuit boards 531 are not necessarily restricted by the thickness of the base and only need to be staggered with respect to each other in the fast axis direction. In an extreme case, the laser emitter chips of the laser emitters on the plurality of circuit boards are consecutive in the fast axis direction. Therefore, compared with the arrangement in FIG. 31 and FIG. 32, such an arrangement of the present invention can greatly increase the limit of the angle resolution of the lidar in the vertical direction.

In addition, those skilled in the art may also conceive a combination of a laser emitter emitting board assembly 540 shown in FIG. 40 and FIG. 41 into the embodiments shown in FIG. 1 to FIG. 30. For example, a laser emitter bracket 2011 may not be provided with the comb structure shown in FIG. 14, but only includes a bracket structure for supporting or fixing the laser emitter emitting board assembly 540 shown in FIG. 40 and FIG. 41. Through the laser emitter emitting board assembly shown in FIG. 40 and FIG. 41, the limit of the angular resolution of the lidar in the vertical direction can be effectively increased. Details are not described herein again.

## Claims

1. A lidar, comprising:
a rotor (1), wherein the rotor (1) has an emitting chamber (13) and a receiving chamber (14) that are separated from each other, wherein the emitting chamber and the receiving chamber are asymmetrically distributed;
a laser emitting system disposed in the emitting chamber (13) and comprising a laser emitter bracket (2011) and at least one laser emitter emitting board (2014) fixed to the laser emitter bracket (2011); and
a receiving system disposed in the receiving chamber (14),
wherein the laser emitting system comprises a laser emitter (2015, 510, 520) disposed on the laser emitter emitting board (2014), wherein the laser emitter (2015, 510, 520) comprises:
a base (511, 521) having a positioning portion (5111, 5211) thereon;
a laser emitter chip (512, 522) disposed on the base (511, 521) and having a light-emitting surface (5121, 5221); and
a laser beam shaping element (513, 523) positioned opposite to the light-emitting surface (5121, 5221) of the laser emitter chip (512, 522) through the positioning portion (5111, 5211),
wherein the laser emitter emitting board (2014) comprises a circuit board (531, 541) and a plurality of laser emitters (2015, 510, 520) disposed on the circuit board (531, 541), wherein light-emitting surfaces (5121, 5221) of laser emitter chips (512, 522) of the laser emitters (2015, 510, 520) are oriented in the same direction,
wherein the plurality of laser emitters (2015, 510, 520) are soldered on the circuit board (531, 541), wherein a slow axis direction of the light-emitting surfaces (5121, 5221) of the plurality of laser emitters (2015, 510, 520) are perpendicular to the circuit board (531, 541).

2. The lidar according to claim 1, wherein the positioning portion (5111, 5211) comprises one or more of a V-shaped groove, a U-shaped groove, and a step, and the laser beam shaping element (513, 523) comprises one or more of an optical fiber, a cylindrical lens, a D lens, or an aspherical lens.

3. The lidar according to claim 1 or 2, wherein the laser emitter chip (512, 522) is of an edge-emitting type, the light-emitting surface (5121, 5221) has a slow axis direction and a fast axis direction, wherein the slow axis direction is parallel to a direction in which the laser beam shaping element (513, 523) extends, and the laser beam shaping element (513, 523) is a fast axis compression element configured to compress an angle of divergence of a laser emitted from the light-emitting surface (5121, 5221) in the fast axis direction.

4. The lidar according to claim 1 or 2, wherein the base (511, 521) is a silicon base, the positioning portion (5111, 5211) is formed on the silicon base through an etching process, and the laser emitter (2015, 510, 520) further comprises an electrode disposed on the base (511, 521), wherein the electrode is configured to supply power to the laser emitter chip (512, 522) and comprises a positive electrode (5141, 5241) and a negative electrode (5142, 5242) separated by a partition,
wherein preferably
the positive electrode (5141, 5241) and the negative electrode (5142, 5242) are both disposed on the same surface of the base (511, 521) as the laser emitter chip (512, 522) and on a side surface of the base (511, 521) perpendicular to the light-emitting surface (5121, 5221),
or wherein preferably
the positive electrode (5141, 5241) and the negative electrode (5142, 5242) are both disposed on the same surface of the base (511, 521) as the laser emitter chip (512, 522) and on an end surface of the base (511, 521) parallel to the light-emitting surface (5121, 5221).

5. The lidar according to claim 1, wherein the laser emitter bracket (2011) is a comb structure with a plurality of vertical slots, wherein laser emitter emitting boards are respectively disposed in the plurality of slots, wherein light-emitting surfaces (5121, 5221) of laser emitter chips (512, 522) of the laser emitter emitting boards in the plurality of slots are staggered with respect to each other in a fast axis direction.

6. The lidar according to claim 1 or 2, wherein a center of the laser beam shaping element (513, 523) is at the same height as a center of the light-emitting surface (5121, 5221) of the laser emitter chip (512, 522).

7. A lidar, comprising:
a rotor (1), wherein the rotor (1) has an emitting chamber (13) and a receiving chamber (14) that are separated from each other, wherein the emitting chamber and the receiving chamber are asymmetrically distributed;
a laser emitting system disposed in the emitting chamber (13); and
a receiving system disposed in the receiving chamber (14), wherein
the rotor (1) further comprises an outer cylinder (11) and an inner cylinder, wherein a mounting structure for an emitting lens set (203) and a receiving lens set (301) is disposed on a wall of the outer cylinder (11),
wherein the laser emitting system comprises a laser emitter (2015, 510, 520), wherein the laser emitter (2015, 510, 520) comprises:
a base (511, 521) having a positioning portion (5111, 5211) thereon;
a laser emitter chip (512, 522) disposed on the base (511, 521) and having a light-emitting surface (5121, 5221); and
a laser beam shaping element (513, 523) positioned opposite to the light-emitting surface (5121, 5221) of the laser emitter chip (512, 522) through the positioning portion (5111, 5211),
wherein the laser emitter emitting board (2014) comprises a circuit board (531, 541) and a plurality of laser emitters (2015, 510, 520) disposed on the circuit board (531, 541), wherein light-emitting surfaces (5121, 5221) of laser emitter chips (512, 522) of the laser emitters (2015, 510, 520) are oriented in the same direction,
wherein the plurality of laser emitters (2015, 510, 520) are soldered on the circuit board (531, 541), wherein a slow axis direction of the light-emitting surfaces (5121, 5221) of the plurality of laser emitters (2015, 510, 520) are perpendicular to the circuit board (531, 541).

8. The lidar according to claim 7, wherein the positioning portion (5111, 5211) comprises one or more of a V-shaped groove, a U-shaped groove, and a step, and the laser beam shaping element (513, 523) comprises one or more of an optical fiber, a cylindrical lens, a D lens, or an aspherical lens.

9. The lidar according to claim 7 or 8, wherein the laser emitter chip (512, 522) is of an edge-emitting type, the light-emitting surface (5121, 5221) has a slow axis direction and a fast axis direction, wherein the slow axis direction is parallel to a direction in which the laser beam shaping element (513, 523) extends, and the laser beam shaping element (513, 523) is a fast axis compression element configured to compress an angle of divergence of a laser emitted from the light-emitting surface (5121, 5221) in the fast axis direction.

## Patentansprüche

1. Lidar, aufweisend:
einen Rotor (1), wobei der Rotor (1) eine Emissionskammer (13) und eine Empfangskammer (14) aufweist, die voneinander getrennt sind, wobei die Emissionskammer und die Empfangskammer asymmetrisch verteilt sind;
ein Laseremissionssystem, das in der Emissionskammer (13) angeordnet ist und eine Laseremitterhalterung (2011) und mindestens eine Laseremitter-Emitterplatine (2014) aufweist, die an der Laseremitterhalterung (2011) befestigt ist; und
ein Empfangssystem, das in der Empfangskammer (14) angeordnet ist,
wobei das Laseremissionssystem einen Laseremitter (2015, 510, 520) aufweist, der an der Laseremitter-Emitterplatine (2014) angeordnet ist, wobei der Laseremitter (2015, 510, 520) aufweist:
eine Basis (511, 521), die einen Positionierabschnitt (5111, 5211) auf sich aufweist;
einen Laseremitterchip (512, 522), der an der Basis (511, 521) angeordnet ist und eine lichtemittierende Fläche (5121, 5221) aufweist; und
ein Laserstrahlformelement (513, 523), das der laseremittierenden Fläche (5121, 5221) des Laseremitterchips (512, 522) durch den Positionierungsabschnitt (5111, 5211) entgegengesetzt angeordnet ist,
wobei die Laseremitter-Emitterplatine (2014) eine Platine (531, 541) und mehrere Laseremitter (2015, 510, 520) aufweist, die auf der Platine (531, 541) angeordnet sind, wobei lichtemittierende Flächen (5121, 5221) der Laseremitterchips (512, 522) der Laseremitter (2015, 510, 520) in derselben Richtung angeordnet sind,
wobei die mehreren Laseremitter (2015, 510, 520) auf die Platine (531, 541) gelötet sind, wobei eine langsame Achsenrichtung der lichtemittierenden Flächen (5121, 5221) der mehreren Laseremitter (2015, 510, 520) in einem rechten Winkel zu der Platine (531, 541) angeordnet sind.

2. Lidar nach Anspruch 1, wobei der Positionierungsabschnitt (5111, 5211) eine oder mehrere V-förmige Nuten, eine U-förmige Nut und eine Stufe aufweist, und das Laserstrahlformelement (513, 523) eines oder mehrere aus einem Lichtwellenleiter, einer zylindrischen Linse, einer D-Linse oder einer asphärischen Linse aufweist.

3. Lidar nach Anspruch 1 oder 2, wobei der Laseremitterchip (512, 522) einen kantenemittierenden Typ aufweist, die lichtemittierende Fläche (5121, 5221) eine langsame Achsenrichtung und eine schnelle Achsenrichtung aufweist, wobei die langsame Achsenrichtung parallel zu einer Richtung ist, in der sich das Laserstrahlformelement (513, 523) erstreckt, und das Laserstrahlformelement (513, 523) ein schnelles Achsenkompressionselement ist, das eingerichtet ist, einen Divergenzwinkel eines Lasers zu verdichten, der von der lichtemittierenden Fläche (5121, 5221) in der schnellen Achsenrichtung abgestrahlt wird.

4. Lidar nach Anspruch 1 oder 2, wobei die Basis (511, 521) eine Siliziumbasis ist, der Positionierungsabschnitt (5111, 5211) auf der Siliziumbasis durch einen Ätzprozess gebildet wird, und der Laseremitter (2015, 510, 520) ferner eine Elektrode aufweist, die an der Basis (511, 521) angeordnet ist, wobei die Elektrode eingerichtet ist, Leistung an den Laseremitterchip (512, 522) zuzuführen und eine positive Elektrode (5141, 5241) und eine negative Elektrode (5142, 5242) aufweist, die durch eine Trennwand getrennt sind,
wobei bevorzugt
die positive Elektrode (5141, 5241) und die negative Elektrode (5142, 5242) beide auf derselben Fläche der Basis (511, 521) wie der Laseremitterchip (512, 522) und an einer Seitenfläche der Basis (511, 521) im rechten Winkel zu der lichtemittierenden Fläche (5121, 5221) angeordnet sind,
oder wobei bevorzugt
die positive Elektrode (5141, 5241) und die negative Elektrode (5142, 5242) beide auf derselben Fläche der Basis (511, 521) wie der Laseremitterchip (512, 522) und an einer Endfläche der Basis (511, 521) parallel zu der lichtemittierenden Fläche (5121, 5221) angeordnet sind.

5. Lidar nach Anspruch 1, wobei die Laseremitterhalterung (2011) eine Kammstruktur mit mehreren vertikalen Schlitzen ist, wobei Laseremitter-Emitterplatinen jeweils in den mehreren Schlitzen angeordnet sind, wobei lichtemittierende Flächen (5121, 5221) der Laseremitterchips (512, 522) der Laseremitter-Emitterplatinen in den mehreren Schlitzen zueinander abgestuft in einer schnellen Achsenrichtung angeordnet sind.

6. Lidar nach Anspruch 1 oder 2, wobei sich ein Zentrum des Laserstrahlformelements (513, 523) auf derselben Höhe wie ein Zentrum der lichtemittierenden Fläche (5121, 5221) des Laseremitterchips (512, 522) befindet.

7. Lidar, aufweisend:
einen Rotor (1), wobei der Rotor (1) eine Emissionskammer (13) und eine Empfangskammer (14) aufweist, die voneinander getrennt sind, wobei die Emissionskammer und die Empfangskammer asymmetrisch verteilt sind;
ein Laseremissionssystem, das in der Emissionskammer (13) angeordnet ist; und
ein Empfangssystem, das in der Empfangskammer (14) angeordnet ist, wobei
der Rotor (1) ferner einen äußeren Zylinder (11) und einen inneren Zylinder aufweist, wobei eine Montagestruktur für einen Emitterlinsensatz (203) und einen Empfangslinsensatz (301) an einer Wand des äußeren Zylinders (11) angeordnet ist,
wobei das Laseremissionssystem einen Laseremitter (2015, 510, 520) aufweist, wobei der Laseremitter (2015, 510, 520) aufweist:
eine Basis (511, 521), die einen Positionierabschnitt (5111, 5211) auf sich aufweist;
einen Laseremitterchip (512, 522), der an der Basis (511, 521) angeordnet ist und eine lichtemittierende Fläche (5121, 5221) aufweist; und
ein Laserstrahlformelement (513, 523), das der laseremittierenden Fläche (5121, 5221) des Laseremitterchips (512, 522) durch den Positionierungsabschnitt (5111, 5211) entgegengesetzt angeordnet ist,
wobei die Laseremitter-Emitterplatine (2014) eine Platine (531, 541) und mehrere Laseremitter (2015, 510, 520) aufweist, die auf der Platine (531, 541) angeordnet sind, wobei lichtemittierende Flächen (5121, 5221) der Laseremitterchips (512, 522) der Laseremitter (2015, 510, 520) in derselben Richtung angeordnet sind,
wobei die mehreren Laseremitter (2015, 510, 520) auf die Platine (531, 541) gelötet sind, wobei eine langsame Achsenrichtung der lichtemittierenden Flächen (5121, 5221) der mehreren Laseremitter (2015, 510, 520) in einem rechten Winkel zu der Platine (531, 541) angeordnet sind.

8. Lidar nach Anspruch 7, wobei der Positionierungsabschnitt (5111, 5211) eine oder mehrere V-förmige Nuten, eine U-förmige Nut und eine Stufe aufweist, und das Laserstrahlformelement (513, 523) eines oder mehrere aus einem Lichtwellenleiter, einer zylindrischen Linse, einer D-Linse oder einer asphärischen Linse aufweist.

9. Lidar nach Anspruch 7 oder 8, wobei der Laseremitterchip (512, 522) einen kantenemittierenden Typ aufweist, die lichtemittierende Fläche (5121, 5221) eine langsame Achsenrichtung und eine schnelle Achsenrichtung aufweist, wobei die langsame Achsenrichtung parallel zu einer Richtung ist, in der sich das Laserstrahlformelement (513, 523) erstreckt, und das Laserstrahlformelement (513, 523) ein schnelles Achsenkompressionselement ist, das eingerichtet ist, einen Divergenzwinkel eines Lasers zu verdichten, der von der lichtemittierenden Fläche (5121, 5221) in der schnellen Achsenrichtung abgestrahlt wird.

## Revendications

1. Lidar, comprenant :
un rotor (1), dans lequel le rotor (1) a une chambre d'émission (13) et une chambre de réception (14) qui sont séparées l'une de l'autre, dans lequel la chambre d'émission et la chambre de réception sont réparties de manière asymétrique ;
un système d'émission laser disposé dans la chambre d'émission (13) et comprenant un support d'émetteur laser (2011) et au moins une carte d'émission d'émetteur laser (2014) fixée au support d'émetteur laser (2011) ; et
un système de réception disposé dans la chambre de réception (14),
dans lequel le système d'émission laser comprend un émetteur laser (2015, 510, 520) disposé sur la carte d'émission d'émetteur laser (2014), dans lequel l'émetteur laser (2015, 510, 520) comprend :
une base (511, 521) ayant une partie de positionnement (5111, 5211) sur celle-ci ;
une puce d'émetteur laser (512, 522) disposée sur la base (511, 521) et ayant une surface électroluminescente (5121, 5221) ; et
un élément de mise en forme de faisceaux laser (513, 523) positionné à l'opposé de la surface électroluminescente (5121, 5221) de la puce d'émetteur laser (512, 522) par le biais de la partie de positionnement (5111, 5211),
dans lequel la carte d'émission d'émetteur laser (2014) comprend une carte de circuit imprimé (531, 541) et une pluralité d'émetteurs laser (2015, 510, 520) disposés sur la carte de circuit imprimé (531, 541), dans lequel les surfaces électroluminescentes (5121, 5221) des puces d'émetteur laser (512, 522) des émetteurs laser (2015, 510, 520) sont orientées dans la même direction,
dans lequel la pluralité d'émetteurs laser (2015, 510, 520) sont soudés sur la carte de circuit imprimé (531, 541), dans lequel une direction d'axe lent des surfaces électroluminescentes (5121, 5221) de la pluralité d'émetteurs laser (2015, 510, 520) est perpendiculaire à la carte de circuit imprimé (531, 541).

2. Lidar selon la revendication 1, dans lequel la partie de positionnement (5111, 5211) comprend un ou plusieurs parmi une rainure en V, une rainure en U et un gradin, et l'élément de mise en forme de faisceaux laser (513, 523) comprend une ou plusieurs parmi une fibre optique, une lentille cylindrique, une lentille en D ou une lentille asphérique.

3. Lidar selon la revendication 1 ou 2, dans lequel la puce d'émetteur de laser (512, 522) est d'un type à émission latérale, la surface électroluminescente (5121, 5221) a une direction d'axe lent et une direction d'axe rapide, dans lequel la direction d'axe lent est parallèle à une direction dans laquelle s'étend l'élément de mise en forme de faisceaux laser (513, 523), et l'élément de mise en forme de faisceaux laser (513, 523) est un élément de compression d'axe rapide configuré pour comprimer un angle de divergence d'un laser émis à partir de la surface électroluminescente (5121, 5221) dans la direction d'axe rapide.

4. Lidar selon la revendication 1 ou 2, dans lequel la base (511, 521) est une base en silicium, la partie de positionnement (5111, 5211) est formée sur la base en silicium par le biais d'un processus de gravure, et l'émetteur laser (2015, 510, 520) comprend en outre une électrode disposée sur la base (511, 521), dans lequel l'électrode est configurée pour fournir de la puissance à la puce d'émetteur laser (512, 522) et comprend une électrode positive (5141, 5241) et une électrode négative (5142, 5242) séparées par une cloison,
dans lequel de préférence
l'électrode positive (5141, 5241) et l'électrode négative (5142, 5242) sont toutes deux disposées sur la même surface de la base (511, 521) que la puce d'émetteur laser (512, 522) et sur une surface latérale de la base (511, 521) perpendiculaire à la surface électroluminescente (5121, 5221),
ou dans lequel de préférence
l'électrode positive (5141, 5241) et l'électrode négative (5142, 5242) sont toutes deux disposées sur la même surface de la base (511, 521) que la puce d'émetteur laser (512, 522) et sur une surface d'extrémité de la base (511, 521) parallèle à la surface électroluminescente (5121, 5221).

5. Lidar selon la revendication 1, dans lequel le support d'émetteur laser (2011) est une structure en peigne avec une pluralité de fentes verticales, dans lequel des cartes d'émission d'émetteur laser sont respectivement disposées dans la pluralité de fentes, dans lequel les surfaces électroluminescentes (5121, 5221) des puces d'émetteur laser (512, 522) des cartes d'émission d'émetteur laser dans la pluralité de fentes sont décalées les unes par rapport aux autres dans une direction d'axe rapide.

6. Lidar selon la revendication 1 ou 2, dans lequel un centre de l'élément de mise en forme de faisceaux laser (513, 523) est à la même hauteur qu'un centre de la surface électroluminescente (5121, 5221) de la puce d'émetteur laser (512, 522).

7. Lidar, comprenant :
un rotor (1), dans lequel le rotor (1) a une chambre d'émission (13) et une chambre de réception (14) qui sont séparées l'une de l'autre, dans lequel la chambre d'émission et la chambre de réception sont réparties de manière asymétrique ;
un système d'émission laser disposé dans la chambre d'émission (13) ; et
un système de réception disposé dans la chambre de réception (14), dans lequel
le rotor (1) comprend en outre un cylindre externe (11) et un cylindre interne, dans lequel une structure de fixation pour un ensemble de lentilles d'émission (203) et un ensemble de lentilles de réception (301) est disposée sur une paroi du cylindre externe (11),
dans lequel le système d'émission laser comprend un émetteur laser (2015, 510, 520), dans lequel l'émetteur laser (2015, 510, 520) comprend :
une base (511, 521) ayant une partie de positionnement (5111, 5211) sur celle-ci ;
une puce d'émetteur laser (512, 522) disposée sur la base (511, 521) et ayant une surface électroluminescente (5121, 5221) ; et
un élément de mise en forme de faisceaux laser (513, 523) positionné à l'opposé de la surface électroluminescente (5121, 5221) de la puce d'émetteur laser (512, 522) par le biais de la partie de positionnement (5111, 5211),
dans lequel la carte d'émission d'émetteur laser (2014) comprend une carte de circuit imprimé (531, 541) et une pluralité d'émetteurs laser (2015, 510, 520) disposés sur la carte de circuit imprimé (531, 541), dans lequel les surfaces électroluminescentes (5121, 5221) des puces d'émetteur laser (512, 522) des émetteurs lasers (2015, 510, 520) sont orientées dans la même direction,
dans lequel la pluralité d'émetteurs laser (2015, 510, 520) sont soudés sur la carte de circuit imprimé (531, 541), dans lequel une direction d'axe lent des surfaces électroluminescentes (5121, 5221) de la pluralité d'émetteurs laser (2015, 510, 520) est perpendiculaire à la carte de circuit imprimé (531, 541).

8. Lidar selon la revendication 7, dans lequel la partie de positionnement (5111, 5211) comprend un ou plusieurs parmi une rainure en V, une rainure en U, et un palier, et l'élément de mise en forme de faisceaux laser (513, 523) comprend une ou plusieurs parmi une fibre optique, une lentille cylindrique, une lentille en D ou une lentille asphérique.

9. Lidar selon la revendication 7 ou 8, dans lequel la puce d'émetteur laser (512, 522) est d'un type à émission latérale, la surface électroluminescente (5121, 5221) a une direction d'axe lent et une direction d'axe rapide, dans lequel la direction d'axe lent est parallèle à une direction dans laquelle s'étend l'élément de mise en forme de faisceaux laser (513, 523), et l'élément de mise en forme de faisceaux laser (513, 523) est un élément de compression d'axe rapide configuré pour comprimer un angle de divergence d'un laser émis à partir de la surface électroluminescente (5121, 5221) dans la direction d'axe rapide.
